(19) Europäisches Patentamt
European Patent Office
Office européen des brevets

(11) Veröffentlichungsnummer: **0 127 579 B1**

# (12) EUROPÄISCHE PATENTSCHRIFT

(45) Veröffentlichungstag der Patentschrift: **07.10.87**

(51) Int. Cl.⁴: **D 06 P 3/06**, C 09 B 67/22

(21) Anmeldenummer: **84810247.1**

(22) Anmeldetag: **21.05.84**

(54) **Verfahren zum Trichromie-Färben oder -Bedrucken.**

(30) Priorität: **25.05.83 CH 2838/83**

(43) Veröffentlichungstag der Anmeldung: **05.12.84 Patentblatt 84/49**

(45) Bekanntmachung des Hinweises auf die Patenterteilung: **07.10.87 Patentblatt 87/41**

(84) Benannte Vertragsstaaten: **AT BE CH DE FR GB IT LI NL**

(56) Entgegenhaltungen:
**EP-A-0 030 919**
**EP-A-0 099 859**
**DE-A-2 243 865**
**DE-A-2 924 661**
**US-A-3 713 768**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Schaetzer, Harry, Waldmattstrasse 39, D-7867 Wehr 2 (DE)**
Erfinder: **Raisin, Helmut, Im Baumgarten 9, CH-4125 Riehen (CH)**
Erfinder: **Mäusezahl, Dieter, Dr., Langgartenstrasse 19, CH-4105 Biel-Benken (CH)**

EP 0 127 579 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die der vorliegenden Erfindung zugrundeliegende Aufgabe war es, ein Verfahren zum Färben oder Bedrucken von natürlichen und synthetischen Polyamidmaterialien mit zur Kombination nach dem Trichromie-Prinzip geeigneten Farbstoffen zu finden. Die in dem Verfahren zu verwendenden Farbstoffe sollen einen gleichmässigen Farbaufbau bei gleichzeitiger Nuancenkonstanz in verschiedenen Konzentrationen und eine gute Kombinierbarkeit zeigen.

Es wurde nun gefunden, dass das unten beschriebene Verfahren den genannten Anforderungen genügt.

Gegenstand der vorliegenden Erfindung ist somit ein Verfahren zum Trichromie-Färben oder -Bedrucken von natürlichen und synthetischen Polyamidmaterialien mit Farbstoffmischungen, welches dadurch gekennzeichnet ist, dass man einen roten Farbstoff der Formel

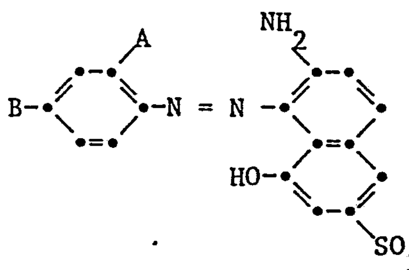

(1),

worin A Wasserstoff und B Acetylamino oder Cyclohexyloxycarbonylamino oder A Trifluormethyl und B Acetylamino oder A Phenylsulfonyl oder Phenoxysulfonyl und B Wasserstoff ist, oder eine Mischung des roten Farbstoffes der Formel (1) mit einem roten Farbstoff der Formel

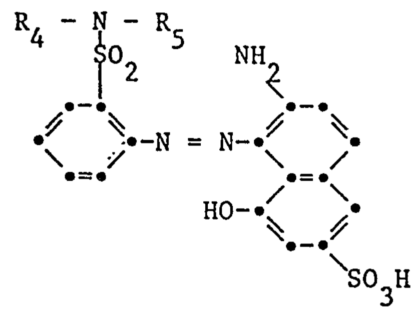

(2),

worin $R_4$ Methyl oder Äthyl und $R_5$ Cyclohexyl oder Phenyl ist, zusammen mit mindestens einem gelben oder orangen Farbstoff der Formel

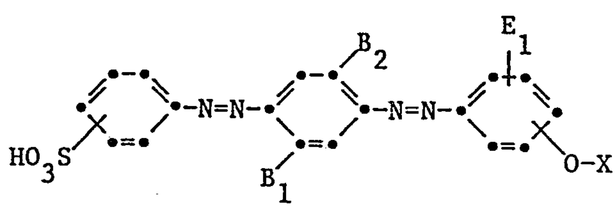

(3),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxylalkyl bedeuten, oder einer Mischung aus mindestens einem gelben oder orangen Farbstoff der Formel (3) mit einem gelben Farbstoff oder Formel

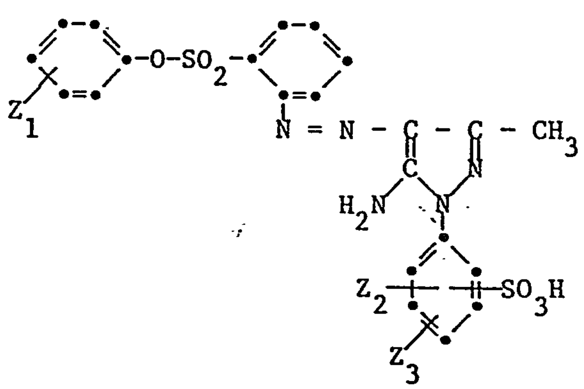

(4),

worin $Z_1$, $Z_2$ und $Z_3$ unabhängig voneinander Wasserstoff, Halogen, $C_{1-4}$-Alkyl oder $C_{1-4}$-Alkoxy bedeuten, und mindestens einem blauen Farbstoff der Formel

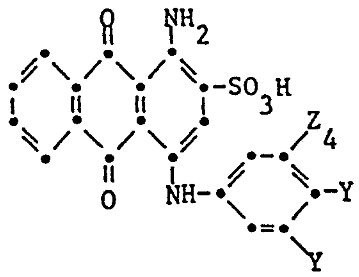

(5),

worin ein Y Wasserstoff oder Methyl und das andere Y $C_{2-4}$-Alkanoylamino oder $C_{2-4}$-Hydroxyalkylsulphamoyl bedeutet und $Z_4$ Wasserstoff oder Methyl ist, verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

In der EP-A 30 919 wird ein Trichromie-Verfahren beschrieben, welches jedoch nicht gleich gute Resultate wie das erfindungsgemässe Verfahren aufweist.

Als Alkylreste kommen für $B_1$, $B_2$, $E_1$, X, $Z_1$, $Z_2$ und $Z_3$ in den Formeln (3) und (4) unabhängig voneinander geradkettige oder verzweigte Alkylreste in Betracht, wie beispielsweise Methyl, Äthyl, Propyl, Isopropyl, Butyl, sek.-Butyl, Isobutyl und tert.-Butyl.

Als Halogen kommt für $Z_1$, $Z_2$ und $Z_3$ in Formel (4), Fluor oder Brom und insbesondere Chlor in Betracht.

Als $C_{2-4}$-Alkanoylamino kommt für Y in Formel (5) beispielsweise der Acetylamino-, Propionylamino- oder Butyrylaminorest in Betracht.

Als Alkoxyreste kommen für $B_1$, $B_2$, $E_1$, $Z_1$, $Z_2$ und $Z_3$ in den Formeln (3) und (4) beispielsweise der Methoxy-, Äthoxy-, Propoxy-, Isopropoxy-, Butoxy-, sek.-Butoxy-, Isobutoxy- oder tert.-Butoxyrest in Betracht.

Als Hydroxyalkylrest kommt für X in Formel (3) ein geradkettiger oder verzweigter Hydroxyalkylrest in Betracht, wie beispielsweise der β-Hydroxyäthyl-, β-Hydroxypropyl-, β-Hydroxybutyl- oder der α-Äthyl-β-hydroxyäthylrest.

Als $C_{2-4}$-Hydroxyalkylsulphamoylrest kommt für Y in Formel (5) beispielsweise der β-Hydroxyäthylsulphamoyl-, β-Hydroxypropylsulphamoyl-, γ-Hydroxypropylsulphamoyl- oder der β-Hydroxybutylsulphamoylrest in Betracht.

Werden in dem erfindungsgemässen Verfahren Mischungen der roten Farbstoffe der Formeln (1) und (2) verwendet, so ist das Verhältnis der Farbstoffe der Formeln (1) und (2) 90:10 bis 10:90 und insbesondere 70:30 bis 30:70.

Wichtige Verfahrensvarianten sind dadurch gekennzeichnet, dass man a) einen roten Farbstoff der Formel (1), worin A und B die oben angegebenen Bedeutungen haben zusammen mit dem roten Farbstoff der Formel

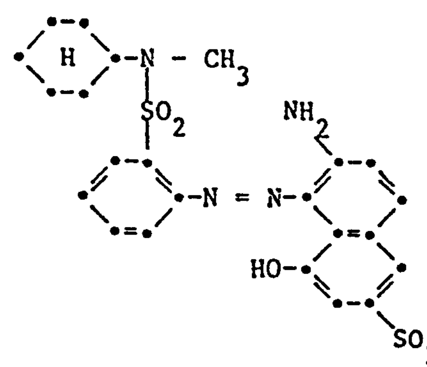

(6)

verwendet.

b) einen roten Farbstoff der Formel (1), worin A und B die oben angegebenen Bedeutungen haben, zusammen mit dem roten Farbstoff der Formel

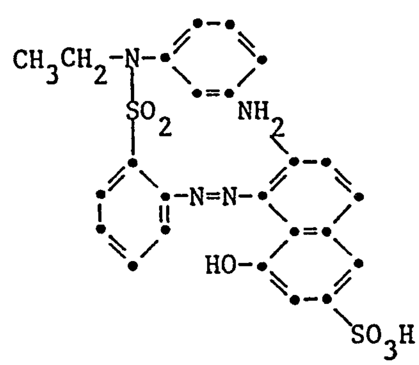

(7)

verwendet.

Als gelben oder orangen Farbstoff der Formel (3) verwendet man vorzugsweise einen Farbstoff der Formel

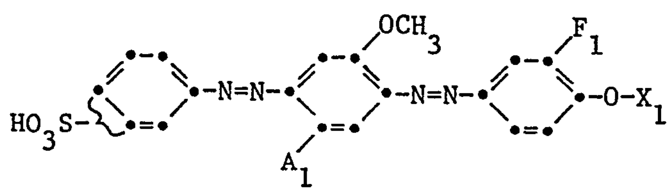

(8),

worin $A_1$ Wasserstoff oder Methyl, $F_1$ Wasserstoff oder Methyl und $X_1$ Methyl, Äthyl, β-Hydroxyäthyl, β-Hydroxypropyl, β-Hydroxybutyl oder α-Äthyl-β-hydroxyäthyl ist.

Als Farbstoff der Formel (4) verwendet man vorzugsweise einen Farbstoff der Formel

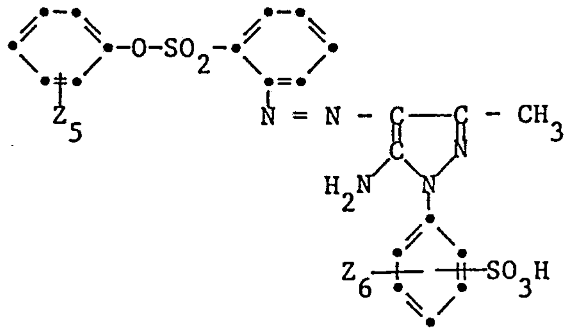

(9),

worin $Z_5$ und $Z_6$ unabhängig voneinander Wasserstoff, Methyl oder Chlor bedeuten.

Insbesondere verwendet man den gelben Farbstoff der Formel

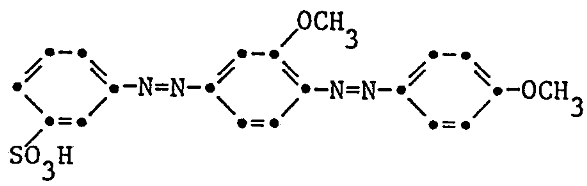

(10),

eine Mischung des gelben Farbstoffs der Formel (10) mit dem orangen Farbstoff der Formel

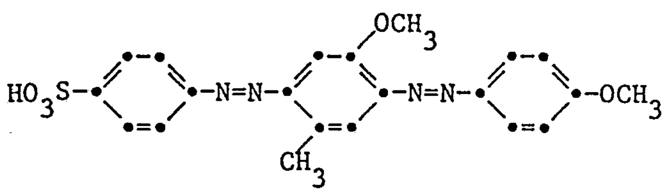

(11)

oder eine Mischung der Farbstoffe der Formeln (10) und (11) mit dem Farbstoff der Formel

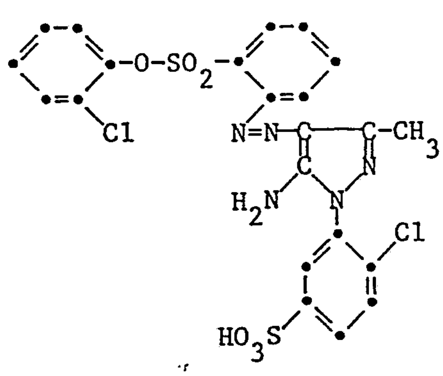

(12),

wobei das Verhältnis der Farbstoffe der Formeln (10) und (11) 60:40 bis 40:60 und insbesondere 1:1 und das Verhältnis der Farbstoffe der Formeln (10), (11) und (12) 60:20:20, 20:60:20 bis 20:20:60 und insbesondere 1:1:1 ist.

Als blauen Farbstoff der Formel (5) verwendet man vorzugsweise einen Farbstoff der Formel

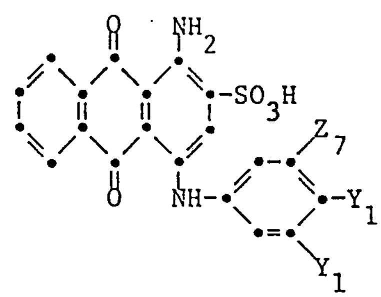

(13),

worin ein $Y_1$ Wasserstoff, oder Methyl und das andere $Y_1$ Acetylamino, Propionylamino oder $C_{2-4}$-Hydroxyalkylsulphamoyl und $Z_7$ Wasserstoff oder Methyl ist, oder eine Mischung der blauen Farbstoffe der Formeln

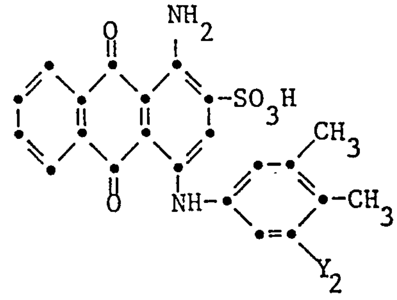

(14),

worin $Y_2$ ein $C_{2-4}$-Hydroxyalkylsulphamoylrest ist, und

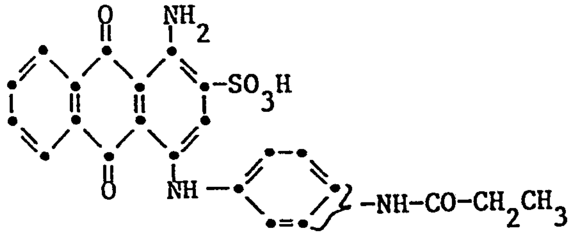

(15),

und insbesondere die Farbstoffe der Formeln

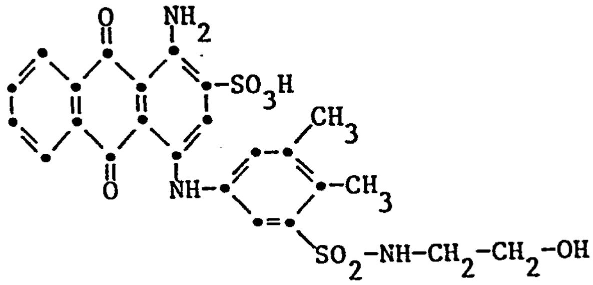

(16),

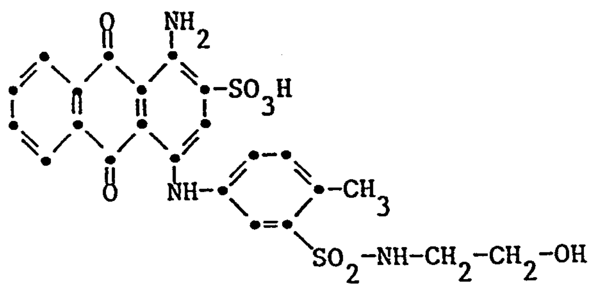

(17),

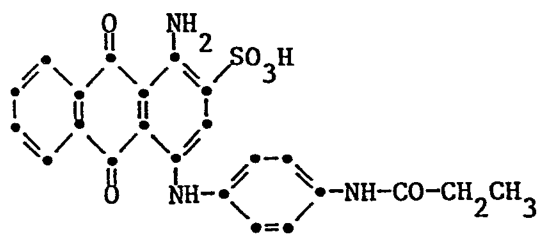

(18),

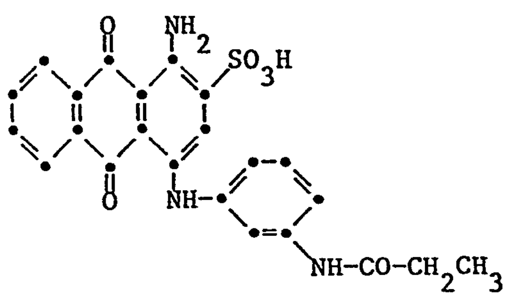

(19),

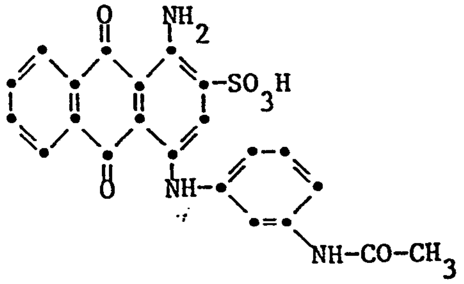

(20),

oder eine Mischung eines Farbstoffs der Formeln (16) oder (17) mit einem Farbstoff der Formeln (18) oder (19).

Die besonders bevorzugten Verfahrensvarianten sind dadurch gekennzeichnet, dass man einen roten Farbstoff der Formel (1), worin A Wasserstoff und B Acetylamino oder Cyclohexyloxycarbonylamino oder A Trifluormethyl und B Acetylamino oder A Phenylsulfonyl oder Phenoxysulfonyl und B Wasserstoff ist, gegebenenfalls in Mischung mit einem roten Farbstoff der Formel (2), worin $R_4$ Methyl und $R_5$ Cyclohexyl oder $R_4$ Äthyl und $R_5$ Phenyl ist, zusammen mit dem gelben Farbstoff der Formel (10) oder mit einer Mischung des gelben Farbstoffs der Formel (10) und des orangen Farbstoffs der Formel (11) oder mit einer Mischung der Farbstoffe der Formeln (10) und (11) mit dem Farbstoff der Formel (12), wobei das Verhältnis der Farbstoffe der Formeln (10) bis (12) 1:1 oder 1:1:1 ist, und einem der blauen Farbstoffe der Formeln (16) und (20) oder einer Mischung des blauen Farbstoffs der Formel (16) mit einem Farbstoff der Formel (15), wobei das Verhältnis der Farbstoffe der Formeln (16) und (15) 60:40 bis 40:60 ist, verwendet.

Die ganz besonders bevorzugte Verfahrensvariante ist dadurch gekennzeichnet, dass man einen roten Farbstoff der Formel (1), worin A Trifluormethyl und B Acetylamino ist, zusammen mit dem gelben Farbstoff der Formel (10) oder mit dem orangen Farbstoff der Formel (11) oder mit einer Mischung der gelben bzw. orangen Farbstoffe der Formeln (10), (11) und (12), wobei das Verhältnis der Farbstoffe der Formeln (10) bis (12) 1:1:1 ist, und einem der blauen Farbstoffe der Formeln (16) und (20) oder einer Mischung des blauen Farbstoffs der Formel (16) mit dem blauen Farbstoff der Formel (18), wobei das Verhältnis der Farbstoffe der Formeln (16) und (18) 60:40 bis 40:60 ist, verwendet.

Eine ebenfalls bevorzugte Verfahrensvariante ist dadurch gekennzeichnet, dass man einen roten Farbstoff der Formel (1) zusammen mit mindestens einem gelben oder orangen Farbstoff der Formel (3) oder eine Mischung aus mindestens einem gelben oder orangen Farbstoff der Formel (3) mit einem gelben Farbstoff der Formel (4) und mindestens einem blauen Farbstoff der Formel (5) verwendet.

Die in dem erfindungsgemässen Verfahren zum Trichromie-Färben oder -Bedrucken verwendeten Farbstoffe sind bekannt oder können in Analogie zu bekannten Verfahren hergestellt werden. So können beispielsweise die Farbstoffe der Formeln (1) und (2) gemäss den Angaben aus der Deutschen Patentschrift 702 932 und 2 063 907 der Deutschen Offenlegungsschrift 2 712 170, die Farbstoffe der Formel (5) gemäss den Angaben aus den US-Patentschriften 3 778 453 und 1 927 125 und die Farbstoffe der Formeln (3) und (4) gemäss den Angaben der Deutschen Offenlegungsschrift 2 142 412 und der Deutschen Auslegeschrift 1 100 846 hergestellt werden.

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe durch Zerstäubungstrocknen der wässrigen Farbstoffmischungen hergestellt werden.

Die in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben oder -Bedrucken kann auf die üblichen Färbe- bzw. Druckverfahren angewendet werden. Die Färbeflotte oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdikker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten sowie insbesondere durch sehr gute Kombinierbarkeit aus.

Das erfindungsgemässe Verfahren eignet sich zum Färben oder Bedrucken sowohl von natürlichen Polyamidmaterialien wie z.B. Wolle wie insbesondere von synthetischen Polyamidmaterialien wie z.B. Perlon oder Nylon und es ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beipiel 1

Man färbt 10 Teile Helancatrikot in 500 Teilen einer wässrigen Flotte, die 2 g/l Ammonacetat enthält und mit Essigsäure auf pH 5 gestellt wird. Als Farbstoffe werden 0,2% des roten Farbstoffs der Formel

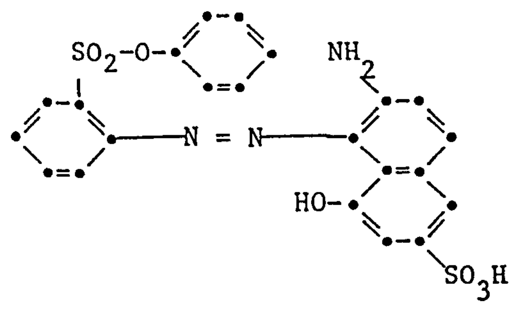

0,6% des orangen Farbstoffs der Formel

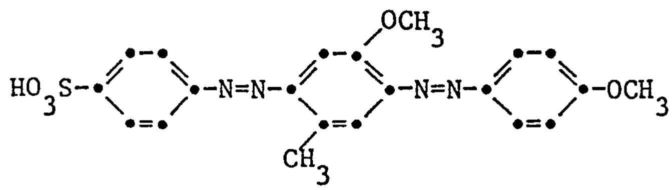

und 0,1% der blauen Farbstoffmischung, die 56,6 Teile des Farbstoffs der Formel

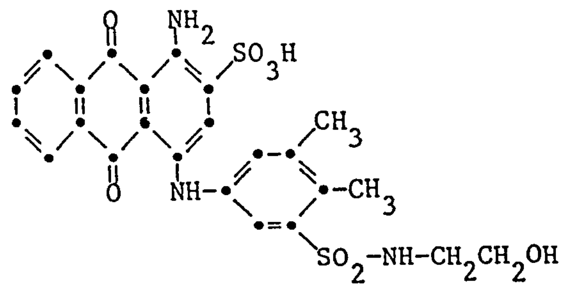

und 43,4 Teile des Farbstoffs der Formel

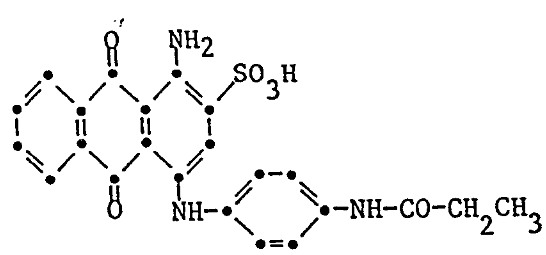

enthält, verwendet, wobei sich die Mengenangaben auf das Fasergewicht beziehen.

Die Färbedauer bei einer Temperatur von 98° beträgt 30 bis 90 Minuten. Das gefärbte Helancastück wird anschliessend herausgenommen und wie üblich gespült und getrocknet. Man erhält ein in rotstichig brauner (Henna Braun) Nuance völlig egal gefärbtes Gewebestück, das keinerlei materialbedingte Streifigkeit aufweist.

Verwendet man anstelle von 0,2% des roten Farbstoffes die in der folgenden Tabelle angegebenen roten Farbstoffe und Farbstoffmischungen, so erhält man bei sonst gleicher Verfahrensweise die in der angegebenen Nuance völlig egal gefärbten Gewebestücke.

Tabelle 1

| Beispiel | Farbstoff | Nuance |
|---|---|---|
| 2 | 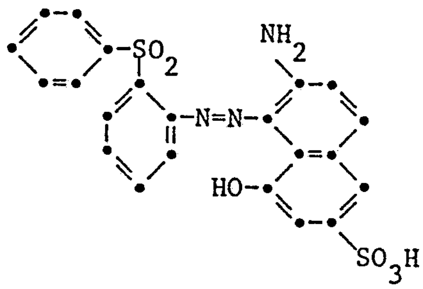 | rotstichig braun |
| 3 | 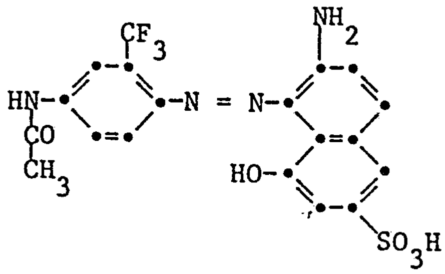 | rotstichig braun |
| 4 | 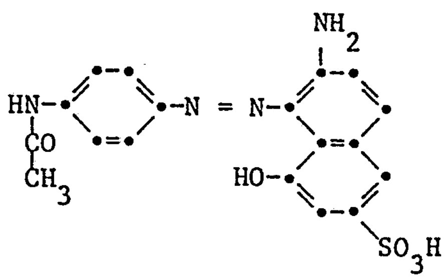 | rotstichig braun |
| 5 | 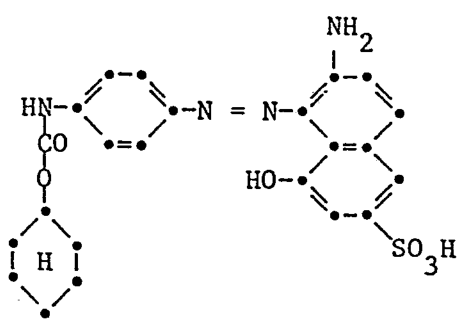 | rotstichig braun |
| 6 | Mischung aus 30 Teilen des Farbstoffs 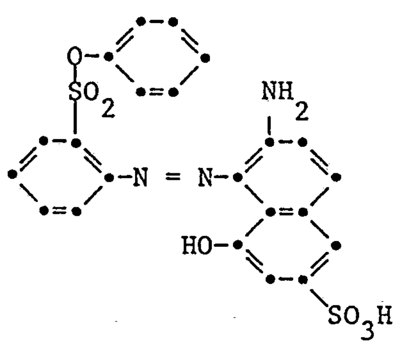 und 70 Teilen des Farbstoffs | rotstichig braun |

Tabelle 1 (Fortsetzung)

| Beispiel | Farbstoff | Nuance |
|---|---|---|
| | 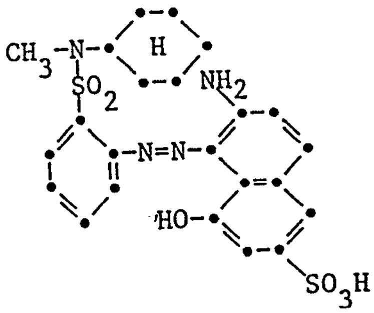 | |
| 7 | Mischung aus 50 Teilen des Farbstoffs<br>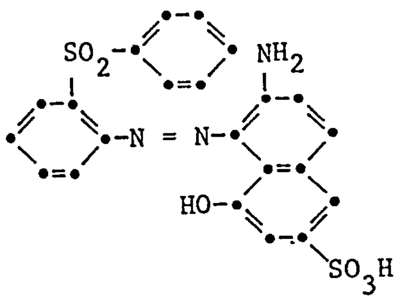<br>und 50 Teilen des Farbstoffs<br>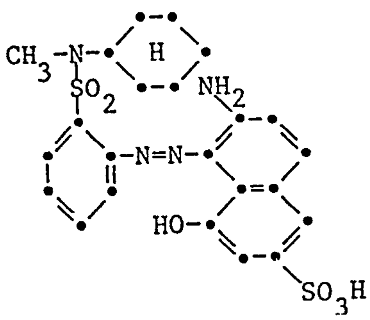 | rotstichig braun |
| 8 | Mischung aus 50 Teilen des Farbstoffs<br>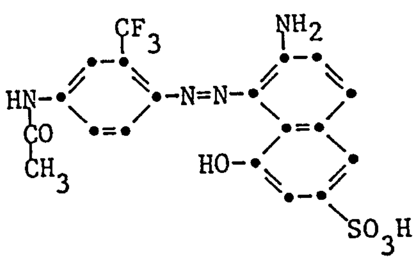<br>und 50 Teilen des Farbstoffs<br>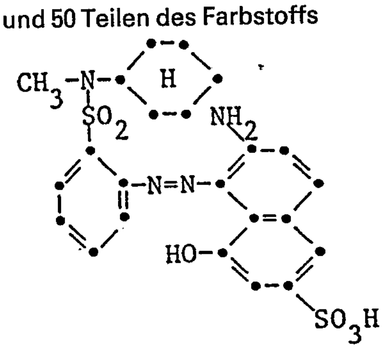 | rotstichig braun |

Tabelle 1 (Fortsetzung)

| Beispiel | Farbstoff | Nuance |
|---|---|---|
| 9 | Mischung aus 20 Teilen des Farbstoffs<br>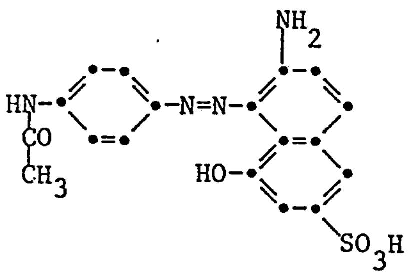<br>und 80 Teilen des Farbstoffs<br>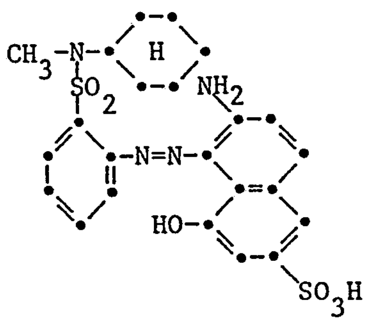 | rotstichig braun |
| 10 | Mischung aus 20 Teilen des Farbstoffs<br>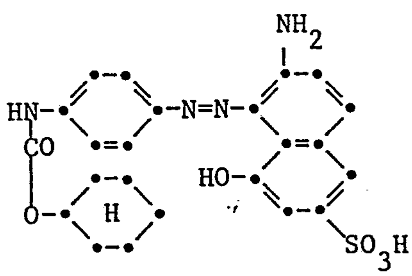<br>und 80 Teilen des Farbstoffs<br>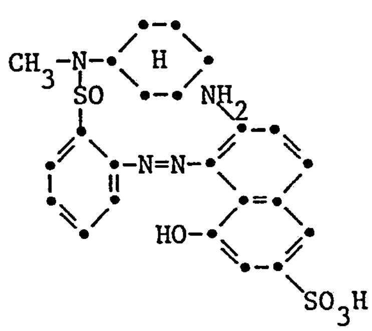 | rotstichig braun |

Beispiel 11

Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,47% des Farbstoffs der Formel

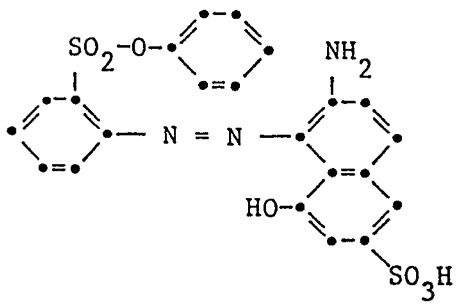

0,45% des Farbstoffs der Formel

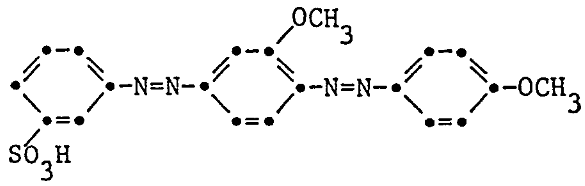

und 0,17% des Farbstoffs der Formel

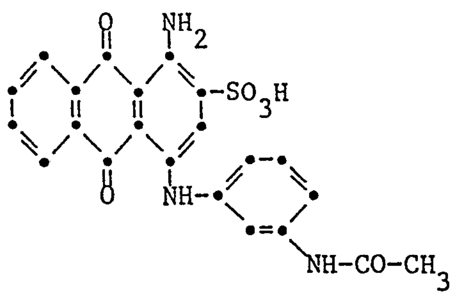

verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in rot brauner Nuance (Rost-Braun) gefärbtes Garn.

Beispiel 12

Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,47% des roten Farbstoffs der Formel

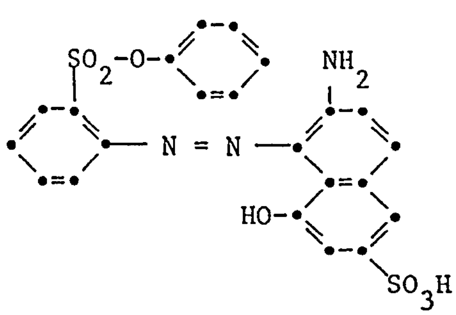

0,45% des gelben Farbstoffs der Formel

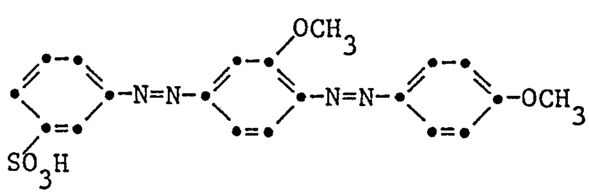

und 0,17% der blauen Farbstoffmischung aus 52 Teilen des Farbstoffs der Formel

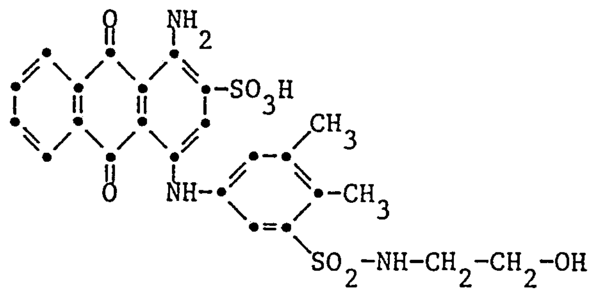

und 48 Teilen des Farbstoffs der Formel

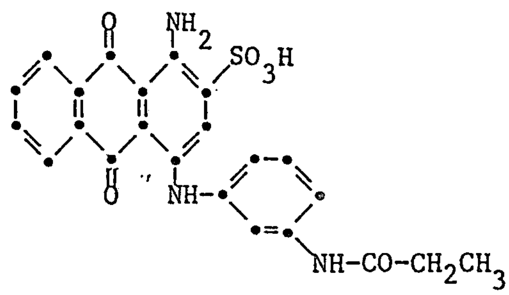

verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in rot brauner Nuance (Rost-Braun) gefärbtes Garn.

Verwendet man anstelle von 0,47% des roten Farbstoffs die in der folgenden Tabelle angegebenen roten Farbstoffe und Farbstoffmischungen, so erhält man bei sonst gleicher Verfahrensweise das in der angegebenen Nuance völlig egal gefärbte Garn.

Tabelle 1 (Fortsetzung)

| Beispiel | Farbstoff | Nuance |
|---|---|---|
| 13 | 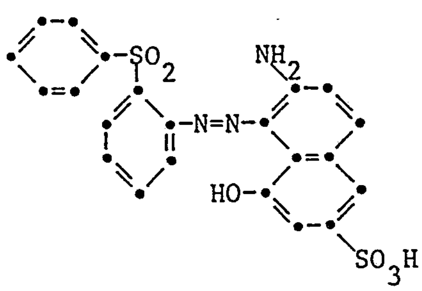 | Rost |
| 14 | 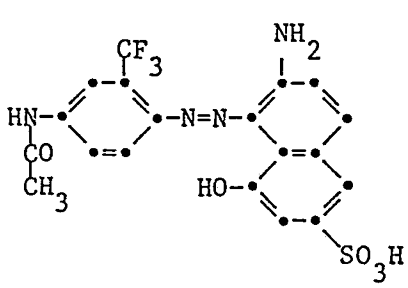 | Rost |

Tabelle 1 (Fortsetzung)

| Beispiel | Farbstoff | Nuance |
|---|---|---|
| 15 | 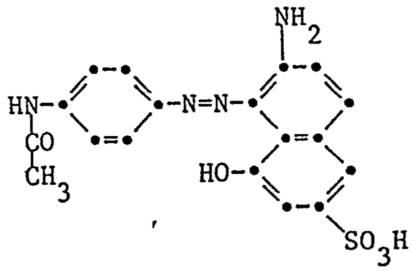 | Rost |
| 16 | 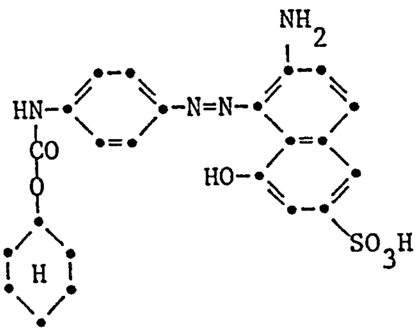 | Rost |
| 17 | Mischung aus 40 Teilen des Farbstoffs<br>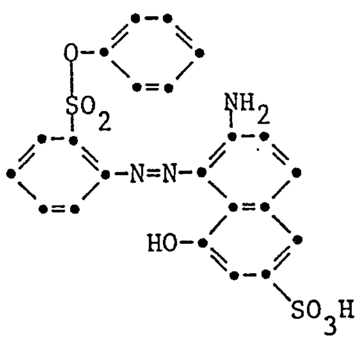<br>und 60 Teilen des Farbstoffs<br>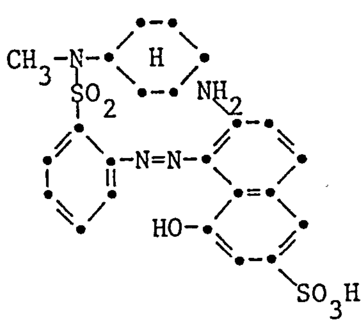 | Rost |

Tabelle 1 (Fortsetzung)

| Beispiel | Farbstoff | Nuance |
|---|---|---|
| 18 | Mischung aus 20 Teilen des Farbstoffs<br>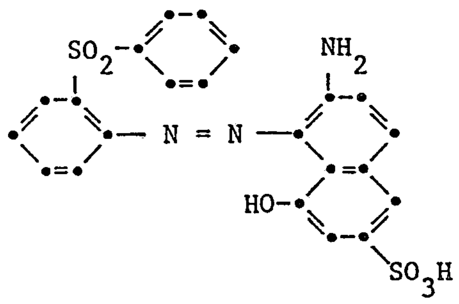<br>und 80 Teilen des Farbstoffs<br>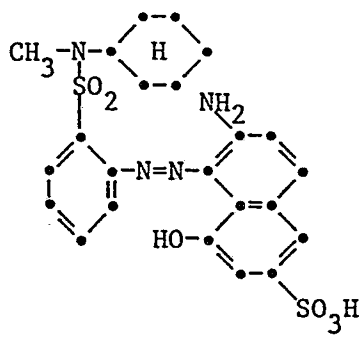 | Rost |
| 19 | Mischung aus 50 Teilen des Farbstoffs<br>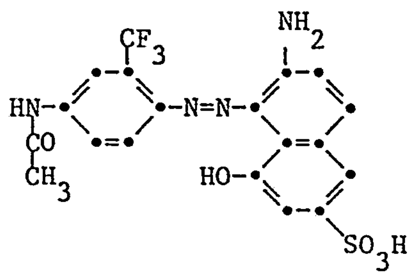<br>und 50 Teilen des Farbstoffs<br>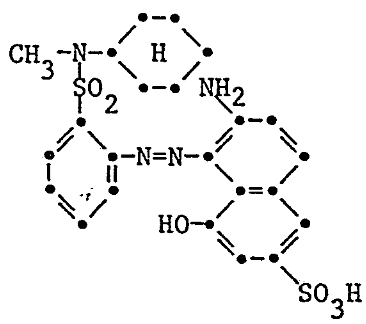 | Rost |

Tabelle 1 (Fortsetzung)

| Beispiel | Farbstoff | Nuance |
|---|---|---|
| 20 | Mischung aus 20 Teilen des Farbstoffs<br>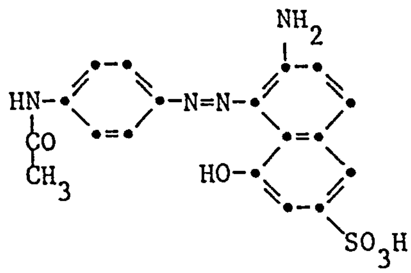<br>und 80 Teilen des Farbstoffs<br>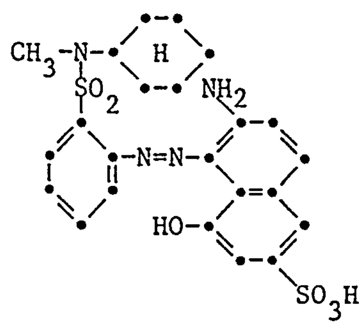 | Rost |
| 21 | Mischung aus 20 Teilen des Farbstoffs<br>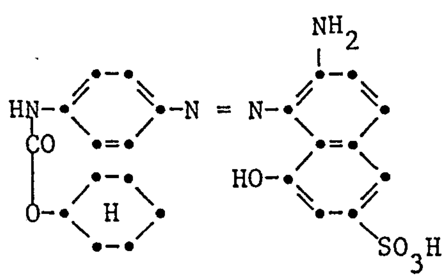<br>und 80 Teilen des Farbstoffs<br>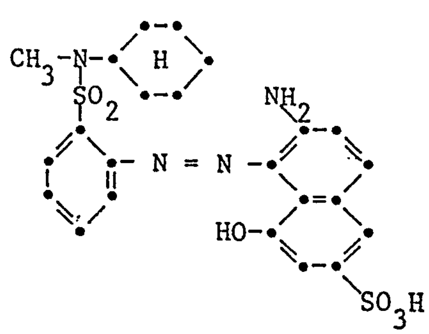 | Rost |

Beispiel 22

500 m² eines Polyamid (6.6)-Schnittflorteppichs (Veloursware mit Polypropylenbändchenrücken) mit einem Quadratmetergewicht von 535 g werden in einer Flotte, die pro Liter 1 g des Umsetzungsprodukts aus 1 Mol Nonylphenol und 9 Mol Äthylenoxyd enthält, kontinuierlich vorgenetzt und dann auf eine Flottenaufnahme von 40 Gewichtsprozent abgesaugt.

In einer Verschäumungsvorrichtung (Mixer) wird aus folgender wässeriger Flotte ein Farbschaum hergestellt, dessen Verschäumungsgrad 1:10 beträgt:

0,45 g/l des roten Farbstoffs der Formel

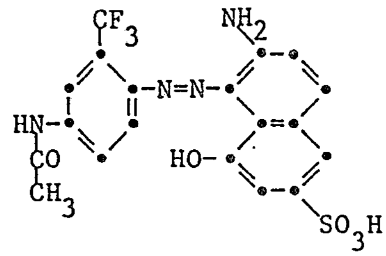

0,9 g/l der gelben Farbstoffmischung, welche die Farbstoffe der Formeln

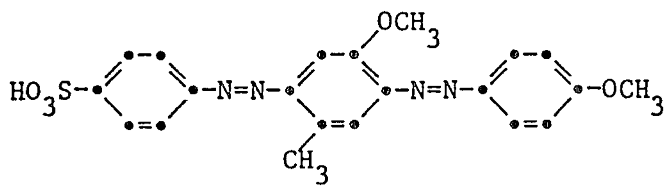

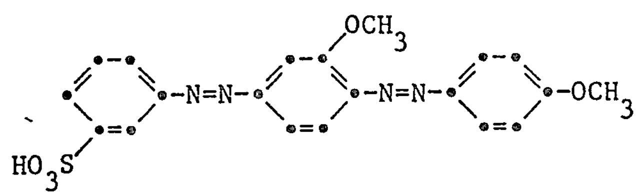

im Verhältnis 1:1 enthält, und
0,3 g/l des blauen Farbstoffs der Formel

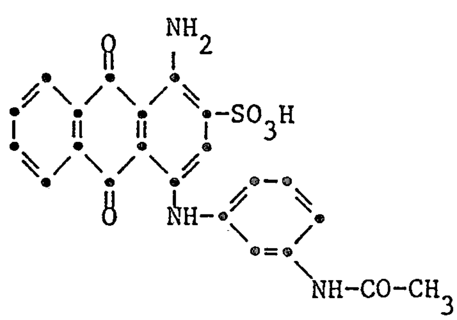

2,5 g/l eines Schaumstabilisatorgemisches aus Kokosfettsäurediäthanolamid/Nonylphenolpolyglykol(11)äther und Lauryltriglykoläthersulfat-Natrium,
0,6 g/l des Siloxanoxyalkylen-Copolymerisates der Formel

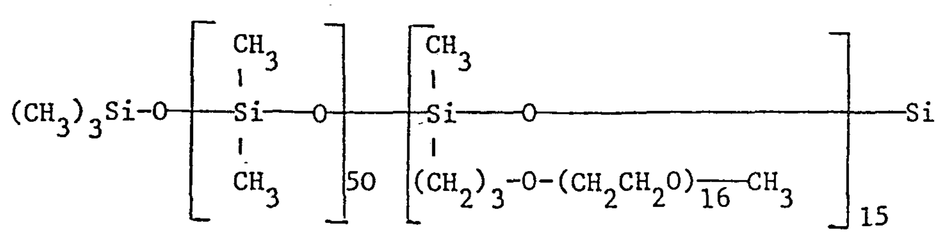

1 g/l Natriumacetat, sowie Essigsäure zur Einstellung der Flotte auf einen pH-Wert von 6,0.

Dieser Schaum wird dann aus einem Schaumbehälter, der eine verstellbare Rakel für die Einstellung der gewünschten Schaumdicke aufweist, über eine Auftragswalze mittels einer Rutsche auf die Polseite des durch die Färbeanlage laufenden Teppichs aufgebracht (Laufgeschwindigkeit 9 m/Minute). Die Schichthöhe des Schaums beträgt 8 mm. Der Farbschaumauftrag beträgt 135%.

Anschliessend durchläuft der Teppich eine Vakuumpassage, in der von der Rückseite her die Schaumschicht teilweise in den Teppich eingesaugt wird (Unterdruck von 0,1 bar), wodurch die Höhe der Schaumschicht etwas reduziert wird. Über eine Transportwalze läuft der Teppich dann in einen Dämpfer (102°, Sattdampf), wo ein leichtes Aufschäumen und dann ein Zerstören des Schaums erfolgt. Anschliessend wird der Teppich mit Wasser von etwa 80° abgespritzt, dann abgesaugt und bei 100 bis 130° auf einem Siebtrommeltrockner getrocknet.

Das erhaltene Teppichmaterial ist egal, in einem beigen Farbton gefärbt, zeigt eine hervorragende Durchfärbung, die Weichheit und Bauschigkeit des Materials wird durch das Schaumfärben positiv beeinflusst.

Verwendet man anstelle von 0,45 g/l des roten Farbstoffs die in der folgenden Tabelle angegebenen roten Farbstoffe und Farbstoffmischungen, so erhält man bei sonst gleicher Verfahrensweise das in der angegebenen Nuance völlig egal gefärbte Teppichmaterial.

Tabelle 1 (Fortsetzung)

| Beispiel | Farbstoff | Nuance |
|---|---|---|
| 23 | 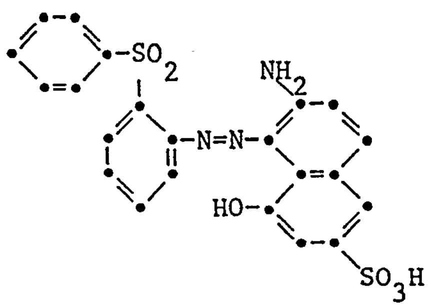 | beige |
| 24 | 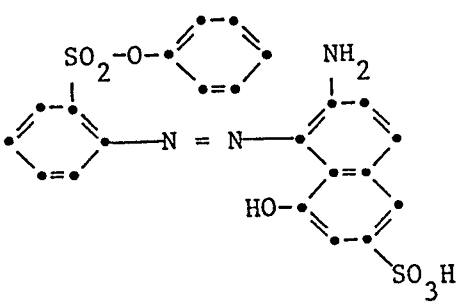 | beige |
| 25 | 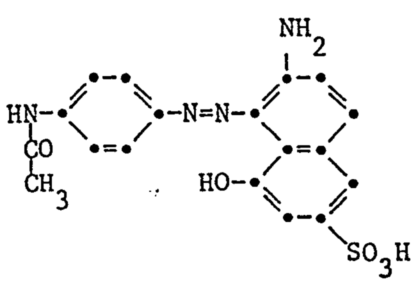 | beige |
| 26 | 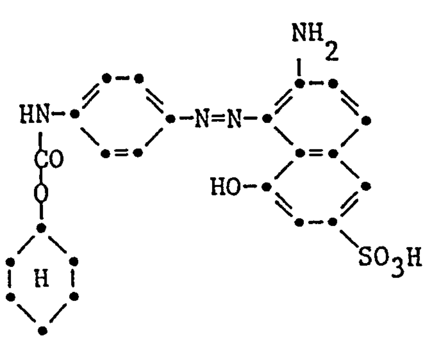 | beige |

Tabelle 1 (Fortsetzung)

| Beispiel | Farbstoff | Nuance |
| --- | --- | --- |
| 27 | Mischung aus 40 Teilen des Farbstoffs 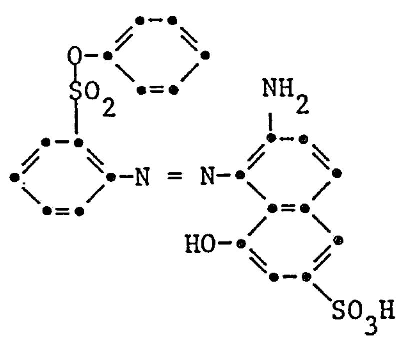 und 60 Teilen des Farbstoffs 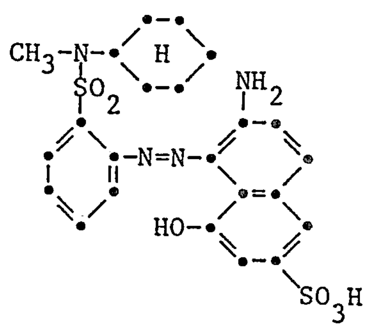 | beige |
| 28 | Mischung aus 30 Teilen des Farbstoffs 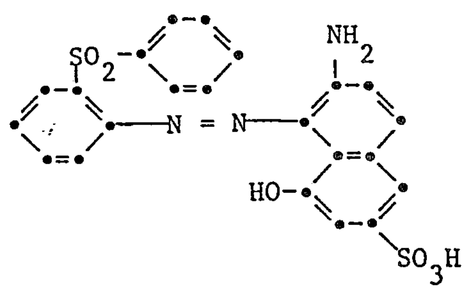 und 70 Teilen des Farbstoffs 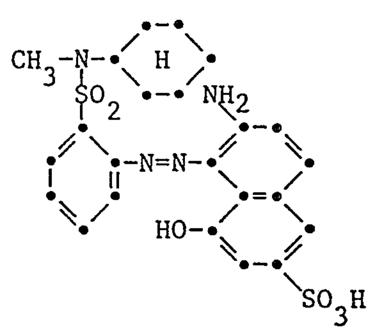 | beige |

Tabelle 1 (Fortsetzung)

| Beispiel | Farbstoff | Nuance |
|---|---|---|
| 29 | Mischung aus 60 Teilen des Farbstoffs 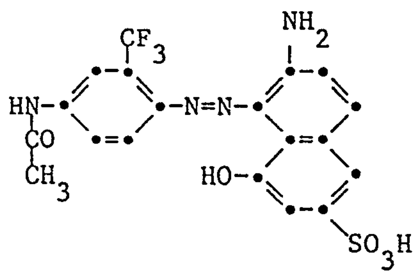 und 40 Teilen des Farbstoffs 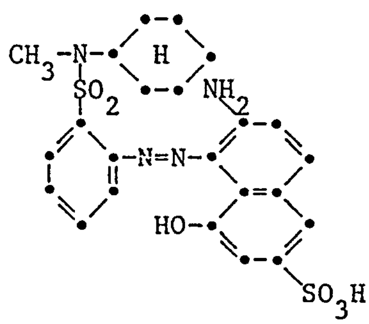 | beige |
| 30 | Mischung aus 10 Teilen des Farbstoffs 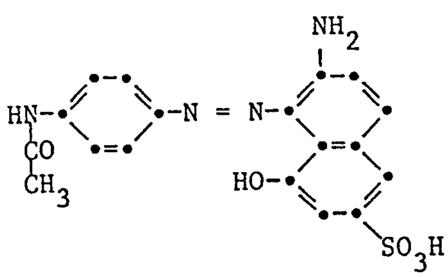 und 90 Teilen des Farbstoffs 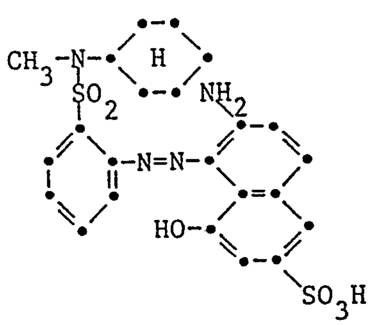 | beige |

Tabelle 1 (Fortsetzung)

| Beispiel | Farbstoff | Nuance |
|---|---|---|
| 31 | Mischung aus 20 Teilen des Farbstoffs<br>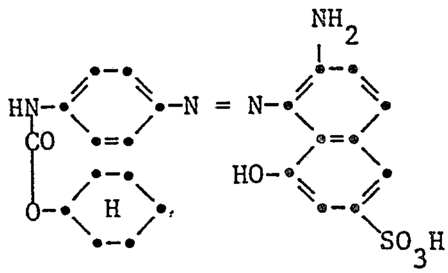<br>und 80 Teilen des Farbstoffs<br>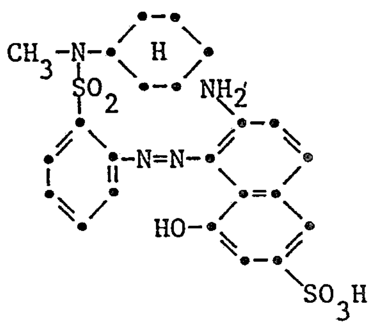 | beige |

Beispiel 32 (Teppichdruck)

Ein Velours-Teppichboden aus Polyamid-6 mit einem Gewicht von 350 bis 400 g/m² wird mit einer Klotzflotte, bestehend aus 988 Teilen Wasser, 10 Teilen Natronlauge 36° Bé und 2 Teilen Netzmittel, auf einem Foulard imprägniert und auf eine Flottenaufnahme von 80% abgequetscht.

Auf den so vorbehandelten Teppich wird mittels einer Düse eine Farbpaste der folgenden Zusammensetzung in Form eines Musters aufgespritzt:

942 Teile Wasser,
50 Teile Verdicker,
3 Teile Antischaummittel,
5 Teile der roten Farbstoffmischung aus 30 Teilen des Farbstoffs der Formel

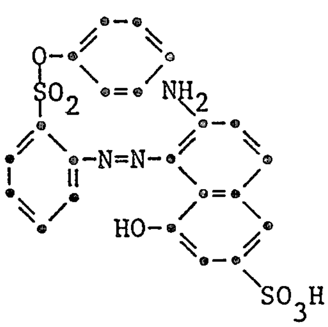

und 70 Teilen des Farbstoffs der Formel

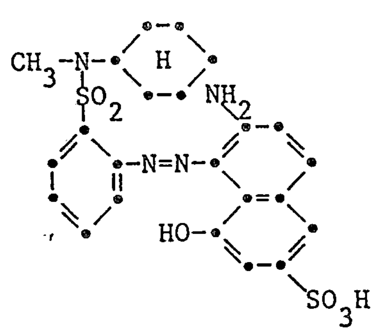

1,5 Teile der Farbstoffmischung bestehend aus den Farbstoffen der Formeln

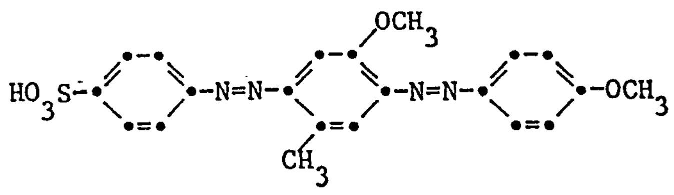

,

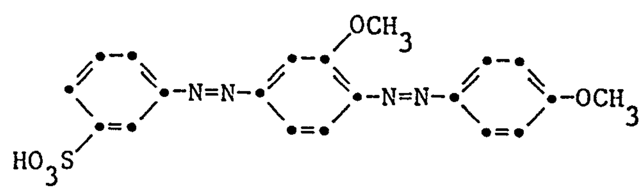

und

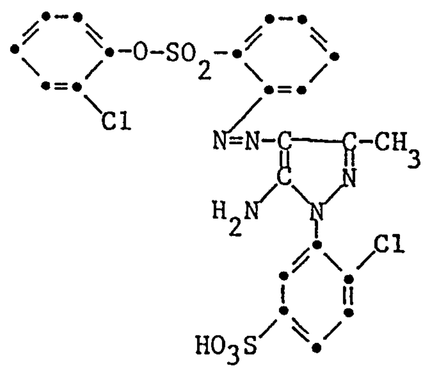

im Verhältnis 1:1:1 und

1 Teil der blauen Farbstoffmischung bestehend aus 52 Teilen des Farbstoffs der Formel

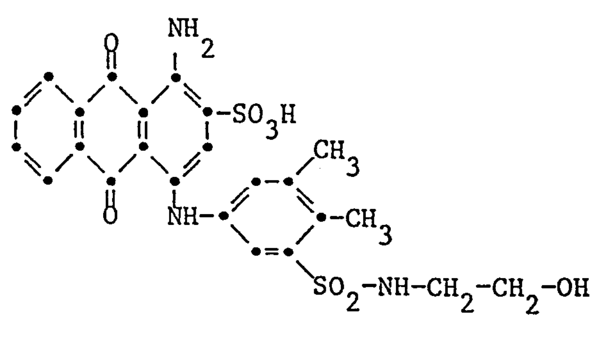

und 48 Teilen des Farbstoffs der Formel

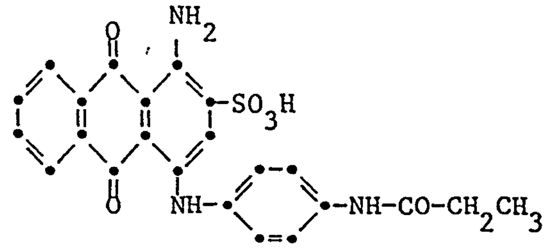

Der verwendete Verdicker weist die folgende Zusammensetzung auf:

240 Teile Lackbenzin,
50 Teile Wasser-in-Öl-Emulgator,
20 Teile Öl-in-Wasser-Emulgator,
20 Teile Antischaummittel,
50 Teile vernetztes Carboxyvinylpolymer mit einem Molekulargewicht von ca. 4 000 000,
70 Teile lineares Carboxyvinylpolymer mit

einem Molekulargewicht von ca. 1 000 000, und

550 Teile Wasser, dessen pH-Wert mit Essigsäure auf 4,5 gestellt wurde.

Das mit der Farbpaste bespritzte Material wird anschliessend während 5 Minuten mit Sattdampf von 101° behandelt zur Fixierung der Farbstoffe, gespült, neutralisiert, erneut gespült und getrocknet.

Man erhält einen Velours-Teppichboden mit einem bordeaux-farbigen Muster mit sehr scharfen Konturen, welcher eine gute Penetration und keinerlei «Frosting» aufweist.

Beispiel 33 (Teppich-Kontinue-Färbung)

2,7 Teile der gelben Farbstoffmischung aus Beispiel 32, 1,2 Teile des roten Farbstoffs von Beispiel 1 und 1,3 Teile der blauen Farbstoffmischung aus Beispiel 32 werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf der Basis eines Kondensationsproduktes einer höher molekularen Fettsäure mit einem Oxyalkylamin, 2,0 Teilen krist. Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden Flotte werden 300%, bezogen auf das Teppichgewicht, auf einen Polyamid-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen in neutral brauner Nuance gefärbten Teppich.

Verwendet man anstelle von 5 Teilen des roten Farbstoffs die in der folgenden Tabelle angegebenen roten Farbstoffe und Farbstoffmischungen, so erhält man bei sonst gleicher Verfahrensweise die in der angegebenen Nuance völlig egal gefärbten Teppiche.

Tabelle 1 (Fortsetzung)

| Beispiel | Farbstoff | Nuance |
|---|---|---|
| 34 | 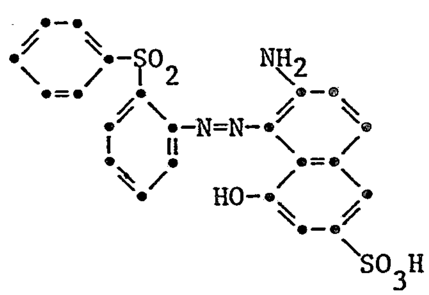 | bordeaux |
| 35 | 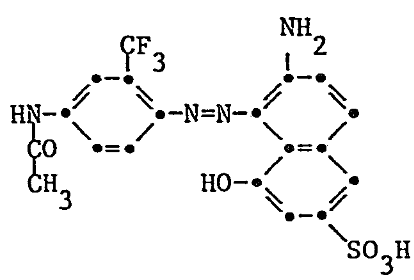 | bordeaux |
| 36 | 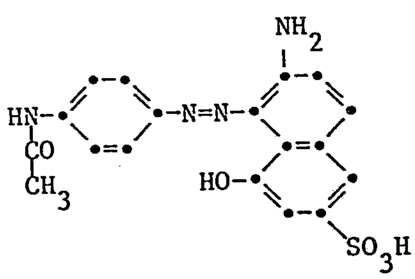 | bordeaux |

Tabelle 1 (Fortsetzung)

| Beispiel | Farbstoff | Nuance |
|---|---|---|
| 37 | 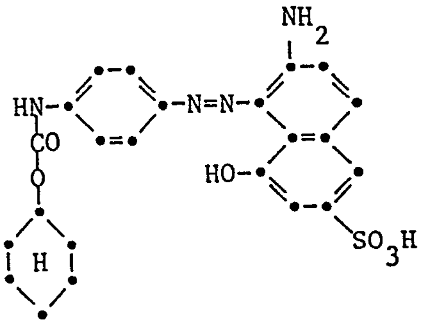 | bordeaux |
| 38 | Mischung aus 50 Teilen des Farbstoffs 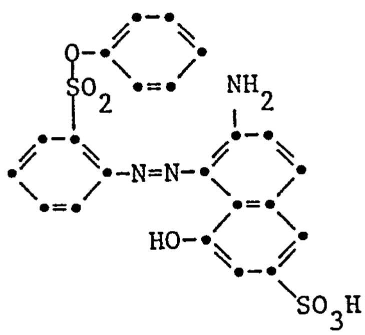 und 50 Teilen des Farbstoffs 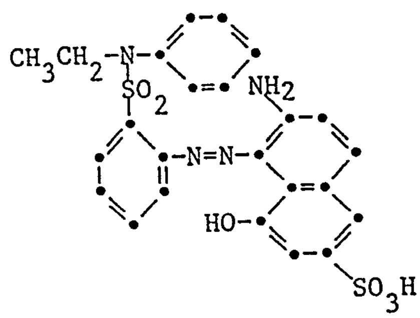 | bordeaux |
| 39 | Mischung aus 50 Teilen des Farbstoffs 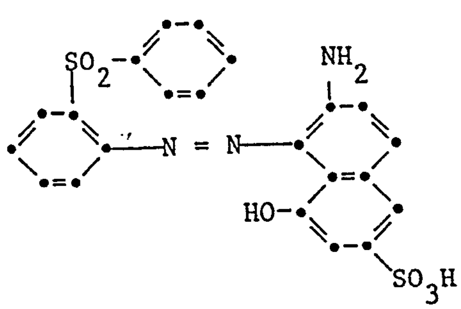 | bordeaux |

Tabelle 1 (Fortsetzung)

| Beispiel | Farbstoff | Nuance |
| --- | --- | --- |
| | und 50 Teilen des Farbstoffs 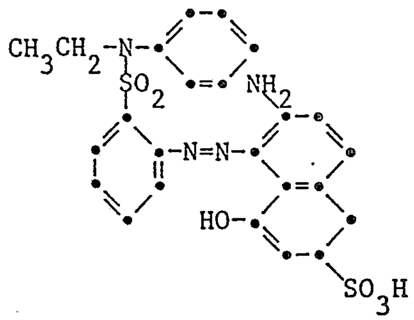 | |
| 40 | Mischung aus 80 Teilen des Farbstoffs 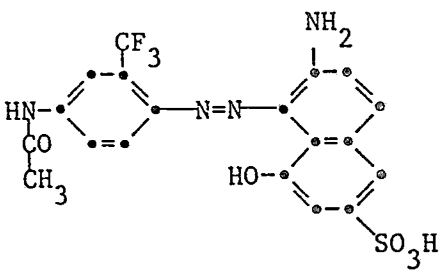 und 20 Teilen des Farbstoffs 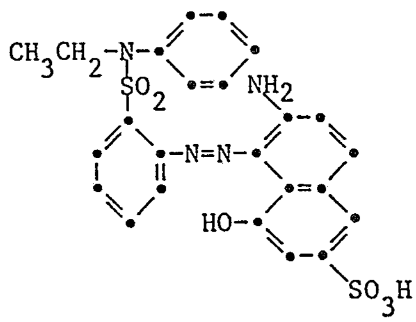 | bordeaux |
| 41 | Mischung aus 20 Teilen des Farbstoffs 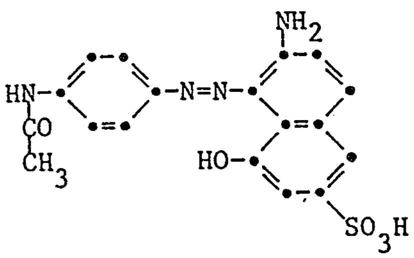 | bordeaux |

Tabelle 1 (Fortsetzung)

| Beispiel | Farbstoff | Nuance |
|---|---|---|
| | und 80 Teilen des Farbstoffs 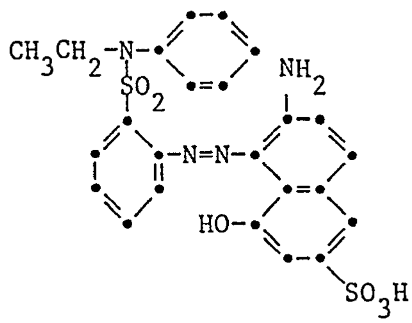 | |
| 42 | Mischung aus 20 Teilen des Farbstoffs 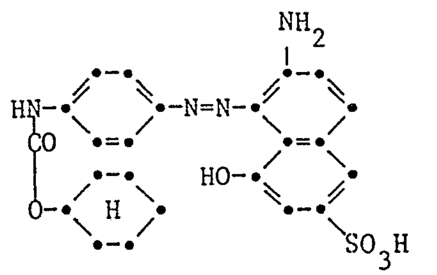 und 80 Teilen des Farbstoffs 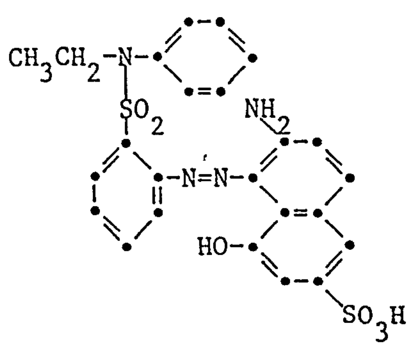 | bordeaux |

Beispiel 43

Verfährt man wie in Beispiel 11 angegeben und verwendet bei sonst gleicher Verfahrensweise anstelle von 0,17% des blauen Farbstoffs der in Beispiel 11 angegebenen Formel, 0,17% des blauen Farbstoffs der Formel

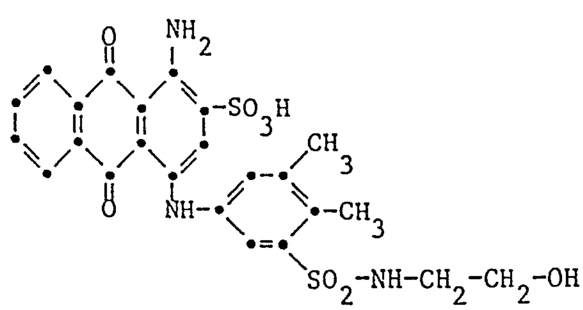

so erhält man ein in rot brauner Nuance (Rost-Braun) gefärbtes Garn.

Beispiel 44 (Woll-Kontinue-Färbung)

Ein Wollstoff wird mit einer Flotte, enthaltend 0,3 Teile der gelben Farbstoffmischung aus Beispiel 22, 11,0 Teile der roten Farbstoffmischung aus Beispiel 6, 10,0 Teile der blauen Farbstoffmischung aus Beispiel 1, 2,0 Teile eines Verdikkungsmittels auf der Basis von Alginat, 22,0 Teile eines koazervatbildenden Klotzmittels auf der Basis eines Kondensationsproduktes einer höher molekularen Fettsäure mit einem Oxyalkylamin und 8,0 Teile 80%ige Ameisensäure in 1000 Teilen Wasser foulardiert, wobei eine Flottenaufnahme von 85%, bezogen auf das Gewicht von Wolle, erreicht wird. Anschliessend dämpft man während 15 Minuten in Sattdampf von 98 bis 100° und wäscht. Man erhält eine gleichmässige Violettfärbung.

Beispiel 45

Verfährt man wie in Beispiel 11 angegeben und verwendet bei sonst gleicher Verfahrensweise anstelle von 0,45% des gelben Farbstoffs der in Beispiel 11 angegebenen Formel, 0,46% des gelben Farbstoffs der Formel

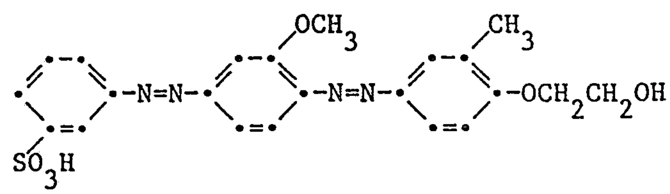

so erhält man ein in rot brauner Nuance gefärbtes Garn.

**Patentansprüche**

1. Verfahren zum Trichromie-Färben oder -Bedrucken von natürlichen und synthetischen Polyamidmaterialien, dadurch gekennzeichnet, dass man einen roten Farbstoff der Formel

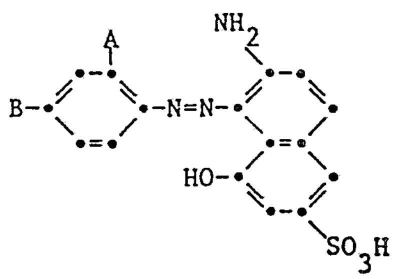

(1),

worin A Wasserstoff und B Acetylamino oder Cyclohexyloxycarbonylamino oder A Trifluormethyl und B Acetylamino oder A Phenylsulfonyl oder Phenoxysulfonyl und B Wasserstoff ist, oder eine Mischung des roten Farbstoffes der Formel (1) mit einem roten Farbstoff der Formel

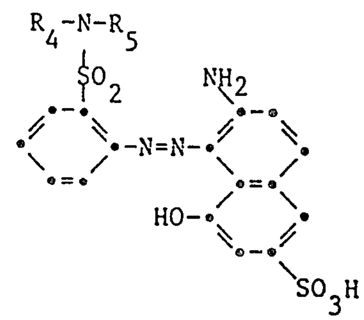

(2),

worin $R_4$ Methyl oder Äthyl und $R_5$ Cyclohexyl oder Phenyl ist, zusammen mit mindestens einem gelben oder orangen Farbstoff der Formel

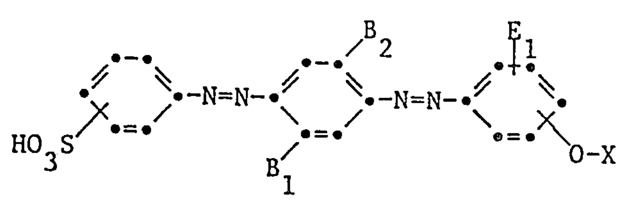

(3),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder einer Mischung aus mindestens einem gelben oder orangen Farbstoff der Formel (3) mit einem gelben Farbstoff der Formel

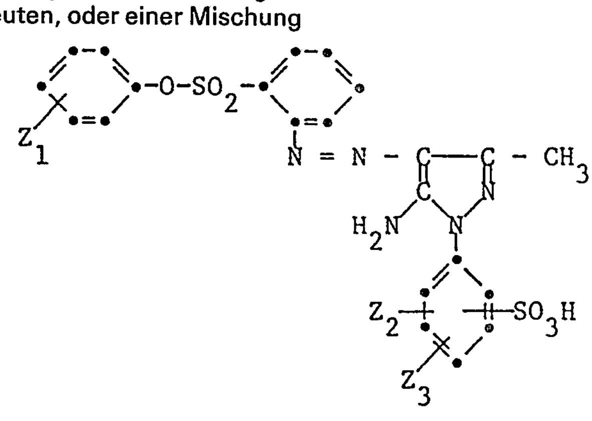

(4),

worin $Z_1$, $Z_2$ und $Z_3$ unabhängig voneinander Wasserstoff, Halogen, $C_{1-4}$-Alkyl oder $C_{1-4}$-Alkoxy bedeuten, und mindestens einem blauen Farbstoff der Formel

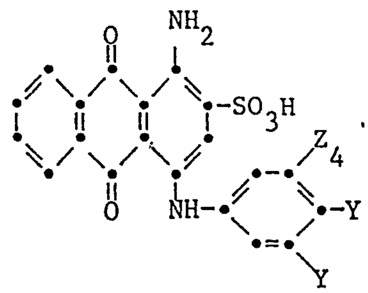

(5),

worin ein Y Wasserstoff oder Methyl und das andere Y $C_{2-4}$-Alkanoylamino oder $C_{2-4}$-Hydroxyalkylsulphamoyl bedeutet und $Z_4$ Wasserstoff oder Methyl ist, verwendet.

2. Verfahren gemäss Anspruch 1, dadurch gekennzeichnet, dass man einen roten Farbstoff der Formel (1), worin A und B die in Anspruch 1 angegebenen Bedeutungen haben zusammen mit dem roten Farbstoff der Formel

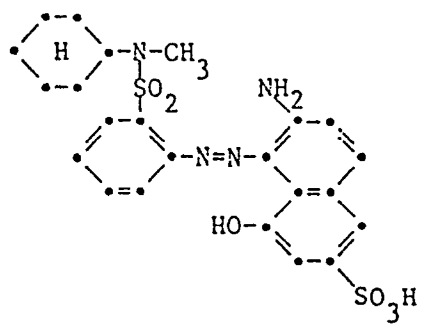

(6)

verwendet.

3. Verfahren gemäss Anspruch 1, dadurch gekennzeichnet, dass man einen roten Farbstoff der Formel (1), worin A und B die in Anspruch 1 angegebenen Bedeutungen haben, zusammen mit dem roten Farbstoff der Formel

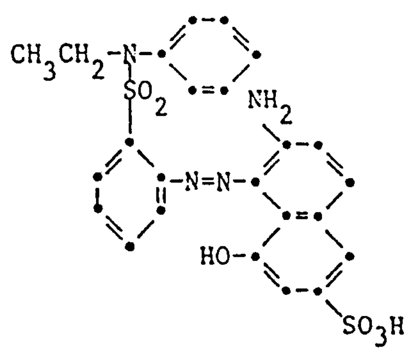

(7)

verwendet.

4. Verfahren gemäss Anspruch 1, dadurch gekennzeichnet, dass man mindestens einen gelben oder orangen Farbstoff der Formel

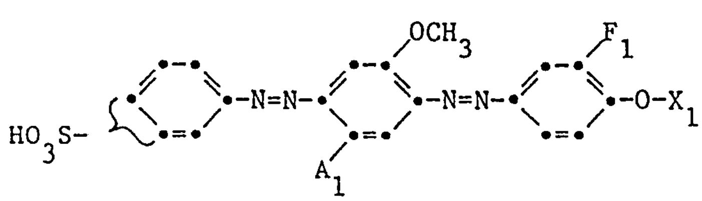

(8),

worin $A_1$ Wasserstoff oder Methyl, $F_1$ Wasserstoff oder Methyl und $X_1$ Methyl, Äthyl, β-Hydroxyäthyl, β-Hydroxypropyl, β-Hydroxybutyl oder α-Äthyl-β-hydroxyäthyl ist, oder eine Mischung aus mindestens einem Farbstoff der Formel (8) und einem gelben Farbstoff der Formel

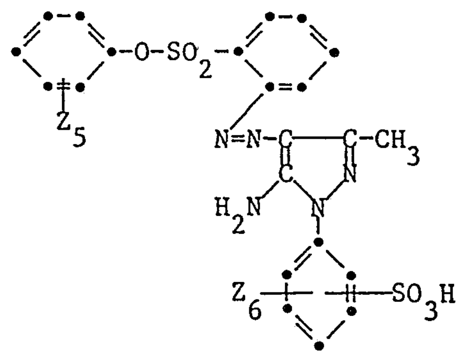

(9),

worin $Z_5$ und $Z_6$ unabhängig voneinander Wasserstoff, Methyl oder Chlor bedeuten, verwendet.

5. Verfahren gemäss Anspruch 4, dadurch gekennzeichnet, dass man den gelben Farbstoff der Formel

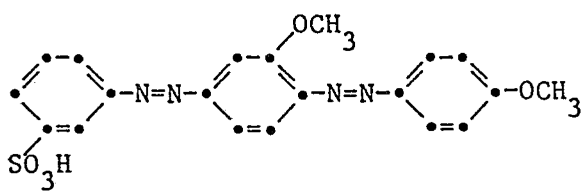

(10),

eine Mischung des gelben Farbstoffs der Formel (10) mit dem orangen Farbstoff der Formel

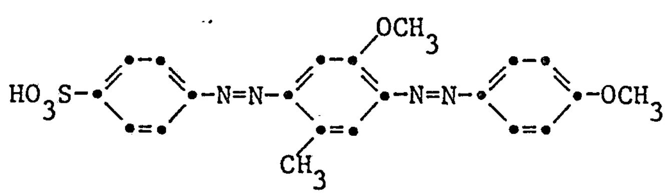

(11)

oder eine Mischung der Farbstoffe der Formeln (10) und (11) mit dem Farbstoff der Formel

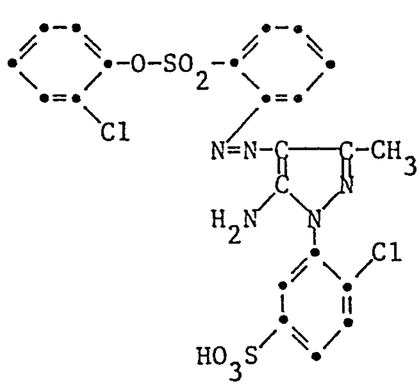

(12)

verwendet, wobei das Verhältnis der Farbstoffe der Formeln (10) und (11) 60:40 bis 40:60 und insbesondere 1:1 und das Verhältnis der Farbstoffe der Formeln (10), (11) und (12) 60:20:20, 20:60:20 bis 20:20:60 und insbesondere 1:1:1 ist.

6. Verfahren gemäss Anspruch 1, dadurch gekennzeichnet, dass man einen blauen Farbstoff der Formel

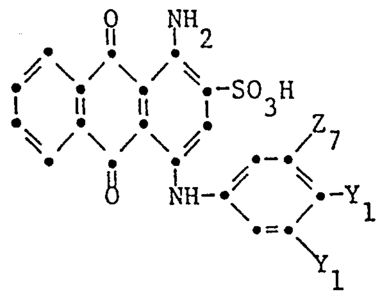

(13),

worin ein $Y_1$ Wasserstoff, oder Methyl und das andere $Y_1$ Acetylamino, Propionylamino oder $C_{2-4}$-Hydroxyalkylsulphamoyl und $Z_7$ Wasserstoff oder Methyl ist, oder eine Mischung der blauen Farbstoffe der Formeln

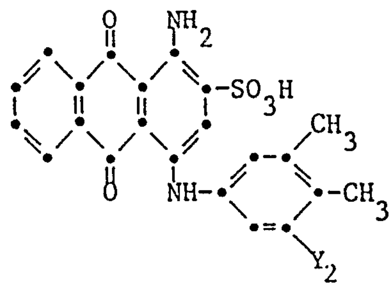

(14),

worin $Y_2$ ein $C_{2-4}$-Hydroxyalkylsulphamoylrest ist, und

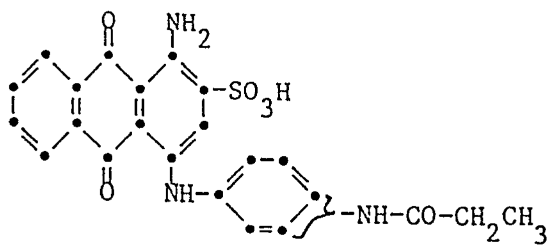

(15)

verwendet.

7. Verfahren gemäss Anspruch 6, dadurch gekennzeichnet, dass man einen blauen Farbstoff der Formeln

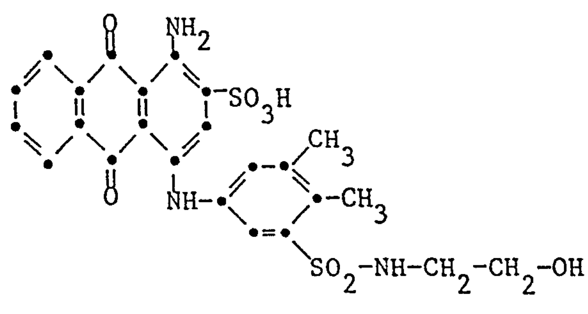

(16)

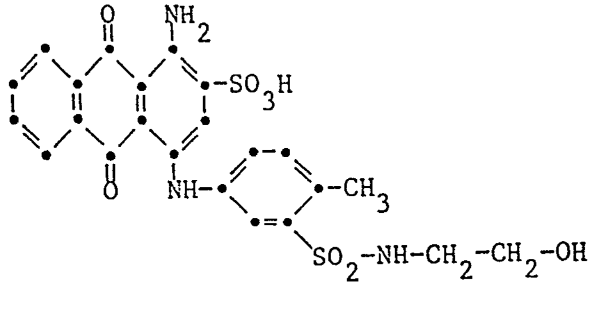

(17)

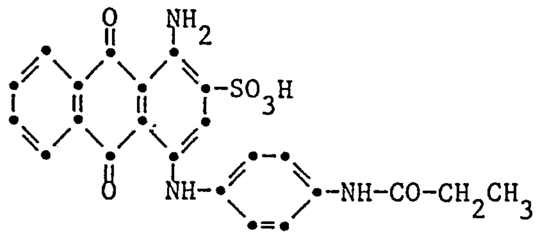

(18)

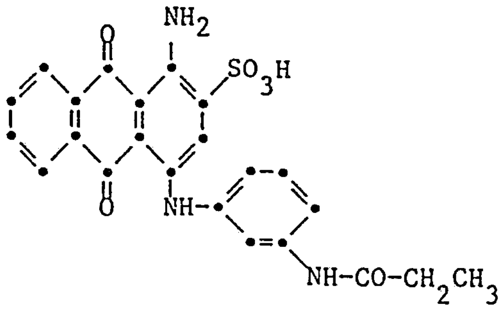

(19)

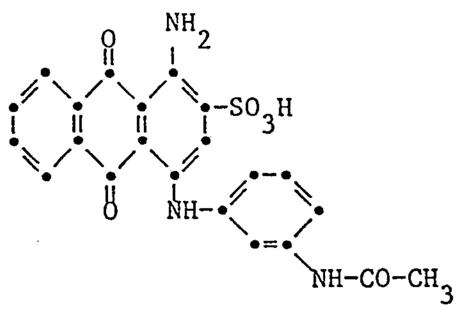

(20)

oder eine Mischung eines Farbstoffs der Formeln (16) oder (17) mit einem Farbstoff der Formeln (18) oder (19) verwendet.

8. Verfahren gemäss Anspruch 1, dadurch gekennzeichnet, dass man einen roten Farbstoff der Formel (1), worin A Wasserstoff und B Acetylamino oder Cyclohexyloxycarbonylamino oder A Trifluormethyl und B Acetylamino oder A Phenylsulfonyl oder Phenoxysulfonyl und B Wasserstoff ist, gegebenenfalls in Mischung mit einem roten Farbstoff der Formel (2), worin $R_4$ Methyl und $R_5$ Cyclohexyl oder $R_4$ Äthyl und $R_5$ Phenyl ist, zusammen mit dem gelben Farbstoff der Formel

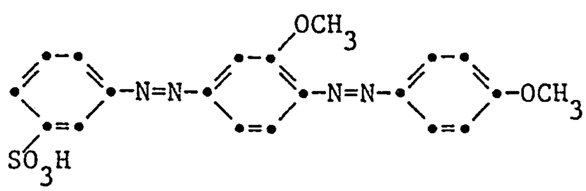

(10),

oder mit einer Mischung des gelben Farbstoffs der Formel (10) und des orangen Farbstoffs der Formel

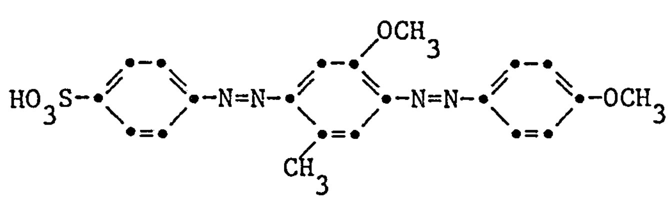

(11)

oder mit einer Mischung der Farbstoffe der Formeln (10) und (11) mit dem Farbstoff der Formel

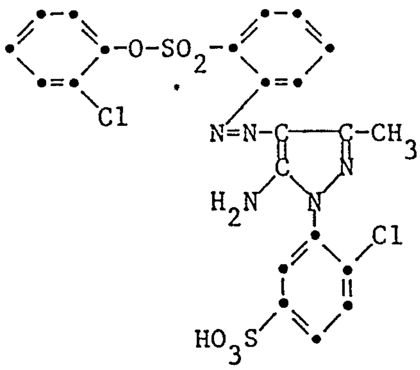

(12),

wobei das Verhältnis der Farbstoffe der Formeln (10) bis (12) 1:1 oder 1:1:1 ist, und einem der blauen Farbstoffe der Formeln

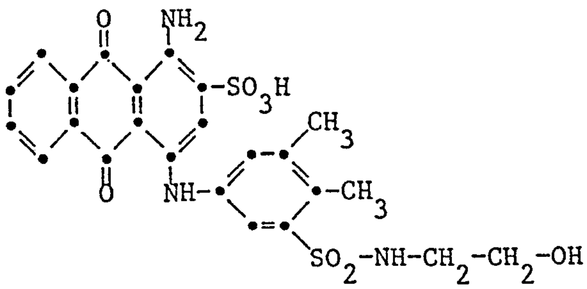

(16) und

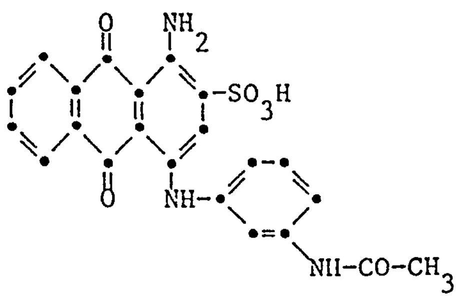

(20)

oder einer Mischung des blauen Farbstoffs der Formel (16) mit einem Farbstoff der Formel

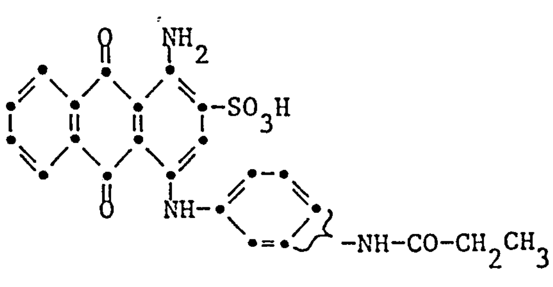

(15),

wobei das Verhältnis der Farbstoffe der Formeln (16) und (15) 60:40 bis 40:60 ist, verwendet.

9. Verfahren gemäss Anspruch 1, dadurch gekennzeichnet, dass man einen roten Farbstoff der Formel (1), worin A Trifluormethyl und B Acetylamino ist, zusammen mit dem gelben Farbstoff der Formel

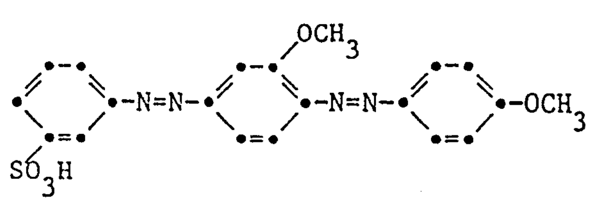

(10),

oder mit dem orangen Farbstoff der Formel

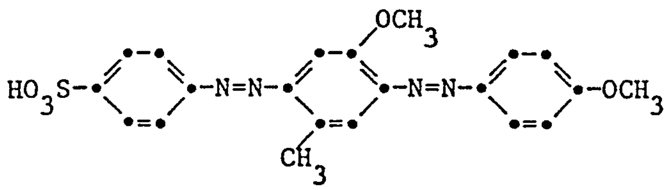

(11),

oder mit einer Mischung der Farbstoffe der Formeln (10) und (11) mit dem Farbstoff der Formel

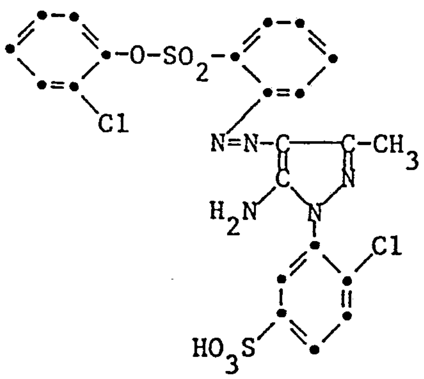

(12),

wobei das Verhältnis der Farbstoffe der Formeln (10) bis (12) 1:1:1 ist, und einem der blauen Farbstoffe der Formeln

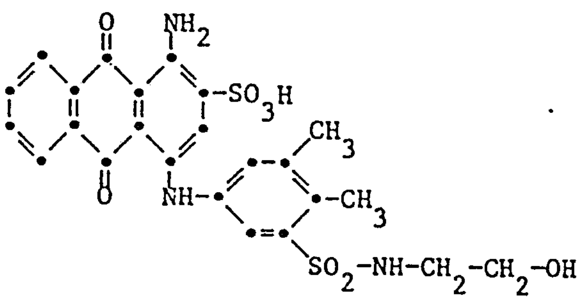

(16) und

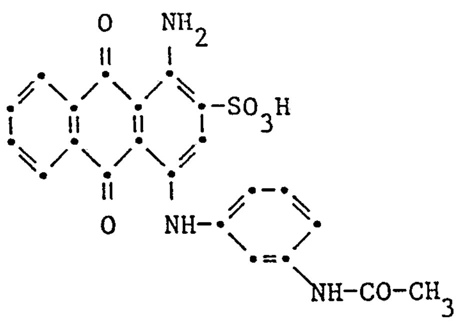

(20),

oder einer Mischung des blauen Farbstoffs der Formel (16) mit dem blauen Farbstoff der Formel

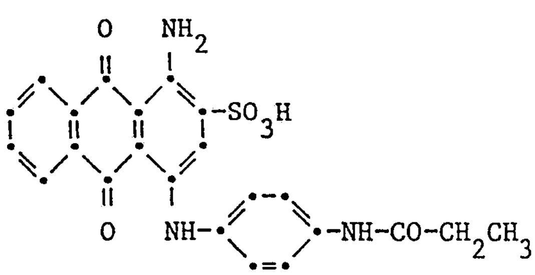

(18),

wobei das Verhältnis der Farbstoffe (16) und (18) 60:40 bis 40:60 ist, verwendet.

10. Verfahren zum Trichromie-Färben oder -Bedrucken von Materialien aus natürlichem und synthetischem Polyamid, dadurch gekennzeichnet, dass man diese Materialien mit einer Färbeflotte oder Druckpaste behandelt, welche die Farbstoffmischung gemäss Anspruch 1 sowie Wasser und gegebenenfalls weitere Zusätze enthält.

11. Wässrige Färbeflotte oder Druckpaste, dadurch gekennzeichnet, dass sie Wasser, die Farbstoffmischung gemäss Anspruch 1 sowie gegebenenfalls weitere Zusätze enthält.

## Claims

1. Process for trichromatic dyeing or printing of natural and synthetic polyamide materials, characterized in that a red dye of the formula

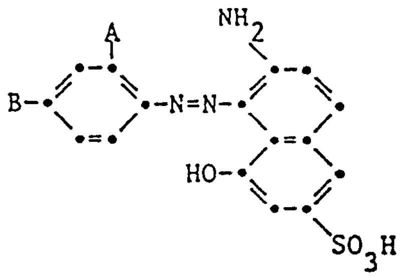

(1)

wherein A is hydrogen and B is acetylamino or cyclohexyloxycarbonylamino or A is trifluoromethyl and B is acetylamino or A is phenylsulfonyl or phenoxysulfonyl and B is hydrogen, or a mixture of the red dye of the formula (1) with a red dye of the formula

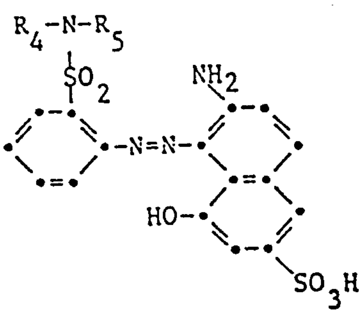

(2)

wherein $R_4$ is methyl or ethyl and $R_5$ is cyclohexyl or phenyl, is used together with at least one yellow or orange dye of the formula

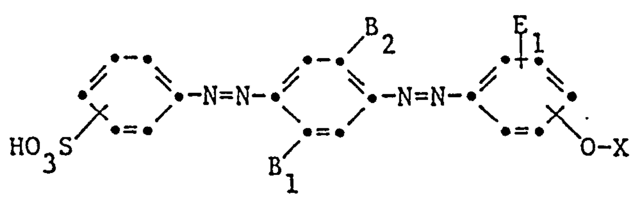

(3)

wherein $B_1$, $B_2$ and $E_1$ denote hydrogen, $C_{1-4}$alkyl or $C_{1-4}$alkoxy, and X denotes straight-chain or branched $C_{1-4}$alkyl or straight-chain or branched $C_{2-4}$hydroxyalkyl, or a mixture of at least one yellow or orange dye of the formula (3) with a yellow dye of the formula

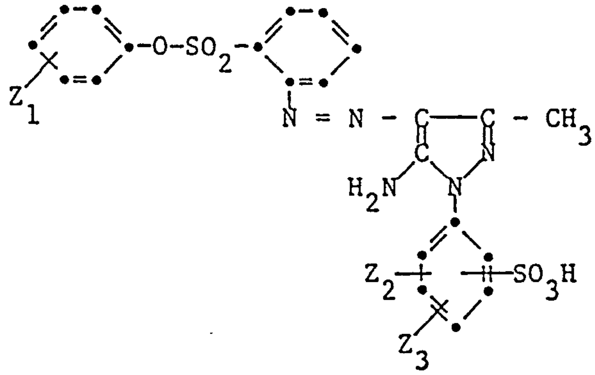

(4)

wherein $Z_1$, $Z_2$ and $Z_3$ independently of one another denote hydrogen, halogen, $C_{1-4}$alkyl or $C_{1-4}$alkoxy, and at least one blue dye of the formula

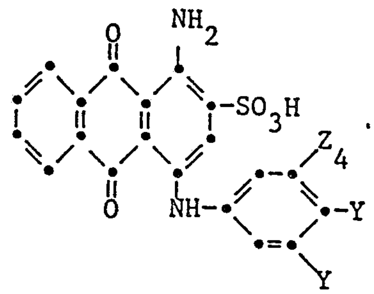

(5)

wherein one Y denotes hydrogen or methyl and the other Y denotes $C_{2-4}$alkanoylamino or $C_{2-4}$hydroxyalkylsulfamoyl and $Z_4$ is hydrogen or methyl.

2. Process according to Claim 1, characterized in that a red dye of the formula (1), wherein A and B have the meanings stated in Claim 1, is used together with the red dye of the formula

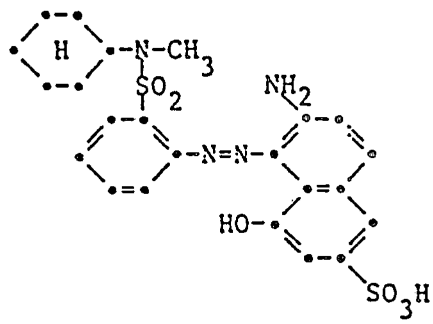

(6).

3. Process according to Claim 1, characterized in that a red dye of the formula (1), wherein A and B have the meanings stated in Claim 1, is used together with the red dye of the formula.

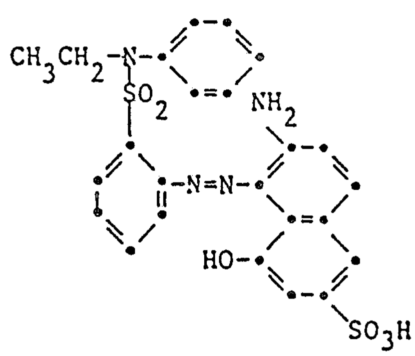

(7).

4. Process according to Claim 1, characterized in that at least one yellow or orange dye of the formula

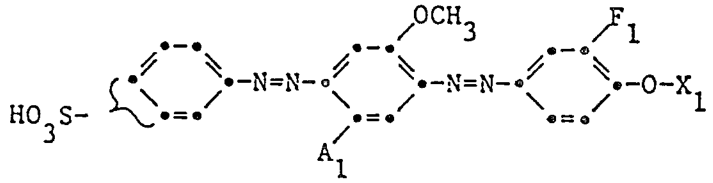

(8)

wherein $A_1$ is hydrogen or methyl, $F_1$ is hydrogen or methyl and $X_1$ is methyl, ethyl, β-hydroxyethyl, β-hydroxypropyl, β-hydroxybutyl or α-ethyl-β-hydroxyethyl, or a mixture of at least one dye of the formula (8) and a yellow dye of the formula

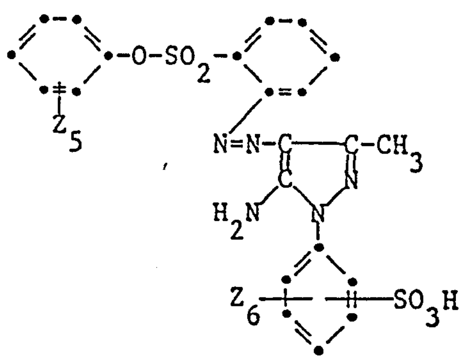

(9)

wherein $Z_5$ and $Z_6$ independently of one another denote hydrogen, methyl or chlorine, is used.

5. Process according to Claim 4, characterized in that the yellow dye of the formula

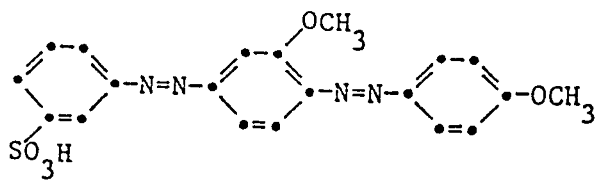

(10)

a mixture of the yellow dye of the formula (10) with the orange dye of the formula

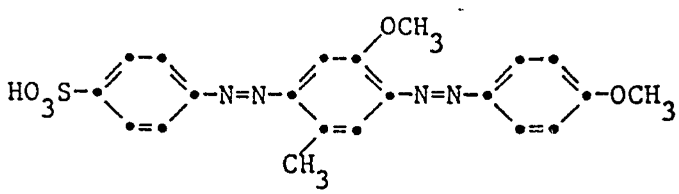

(11)

or a mixture of the dyes of the formulae (10) or (11) with the dye of the formula

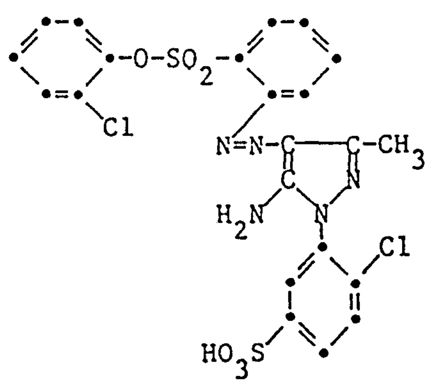

(12)

is used, the ratio of the dyes of the formulae (10) and (11) being 60:40 to 40:60 and in particular 1:1 and the ratio of the dyes of the formulae (10), (11) and (12) being 60:20:20, 20:60:20 to 20:20:60 and in particular 1:1:1.

6. Process according to Claim 1, characterized in that a blue dye of the formula

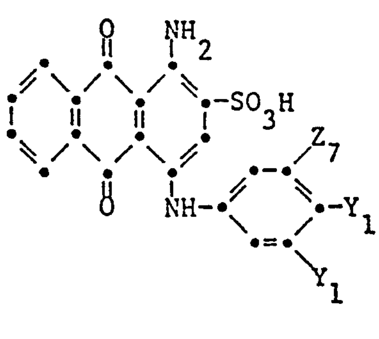

(13)

wherein one $Y_1$ is hydrogen, or methyl and the other $Y_1$ is acetylamino, propionylamino or $C_{2-4}$hydroxyalkalsulfamoyl and $Z_7$ is hydrogen or methyl, or a mixture of the blue dyes of the formulae

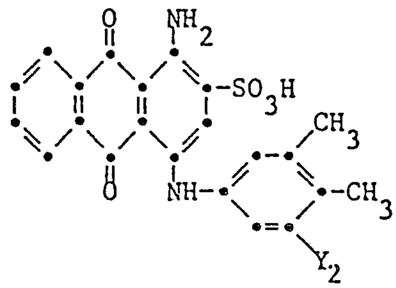

(14)

wherein $Y_2$ is a $C_{2-4}$hydroxyalkylsulfamoyl radical, and

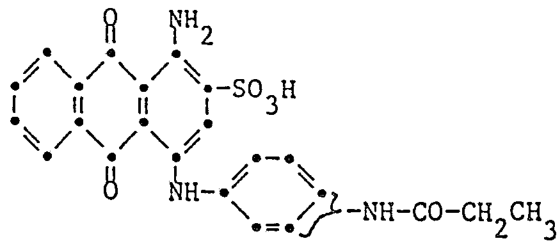

(15)

is used.

7. Process according to Claim 6, characterized in that a blue dye of the formulae

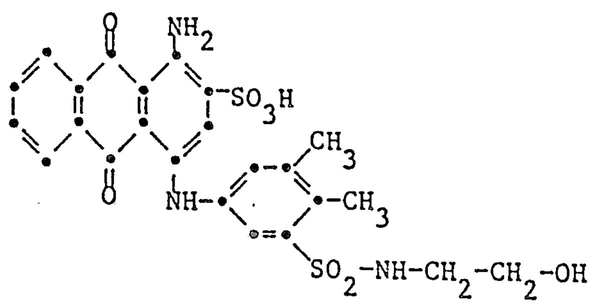

(16)

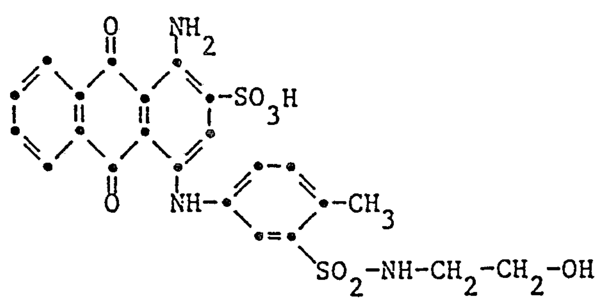

(17)

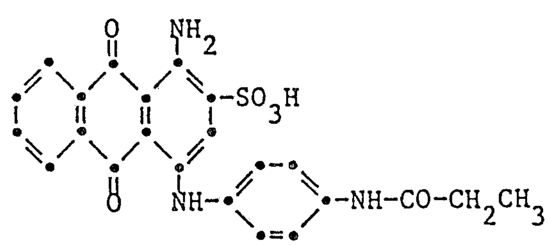

(18)

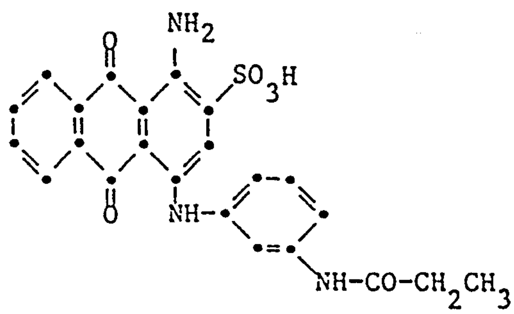

(19)

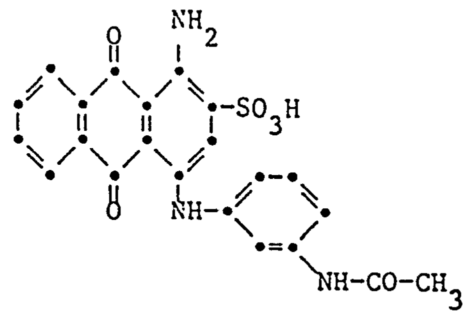

(20)

or a mixture of a dye of the formulae (16) or (17) with a dye of the formulae (18) or (19) is used.

8. Process according to Claim 1, characterized in that a red dye of the formula (1), wherein A is hydrogen and B is acetylamino or cyclohexyloxycarbonylamino, or A is trifluoromethyl and B is acetylamino, or A is phenylsulfonyl or phenoxysulfonyl and B is hydrogen, optionally in admixture with a red dye of the formula (2), wherein $R_4$ is methyl and $R_5$ is cyclohexyl, or $R_4$ is ethyl and $R_5$ is phenyl, is used together with the yellow dye of the formula

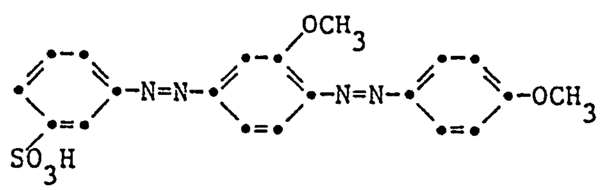

(10)

or with a mixture of the yellow dye of the formula (10) and of the orange dye of the formula

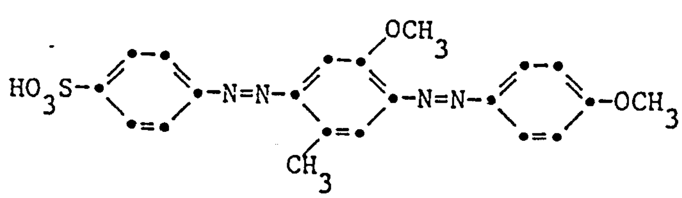

(11)

or with a mixture of the dyes of the formulae (10) and (11) with the dye of the formula

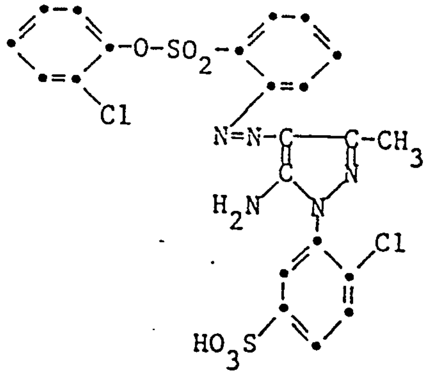

(12)

the ratio of the dyes of the formulae (10) to (12) being 1:1 or 1:1:1 and with one of the blue dyes of the formulae

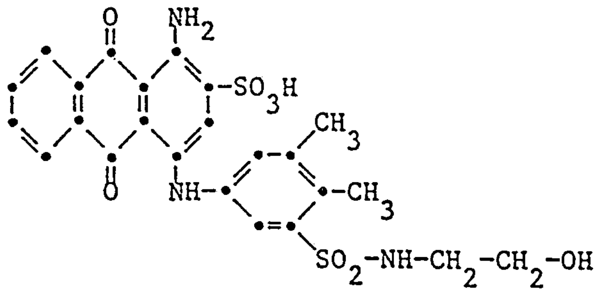

(16) and

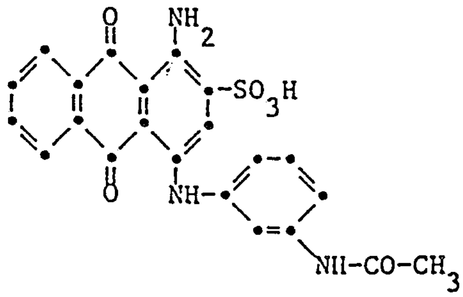

(20)

or with a mixture of the blue dye of the formula (16) with a dye of the formula

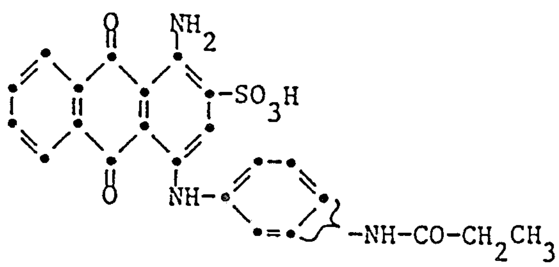

(15)

the ratio of the dyes of the formulae (16) and (15) being 60:40 to 40:60.

9. Process according to Claim 1, characterized in that a red dye of the formula (1), wherein A is trifluoromethyl and B is acetylamino, is used together with the yellow dye of the formula

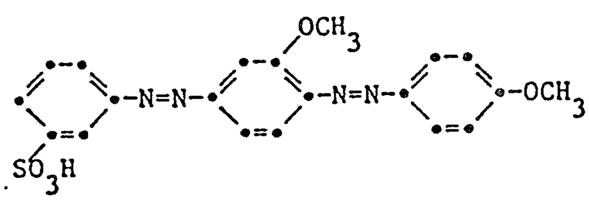

(10)

or with the orange dye of the formula

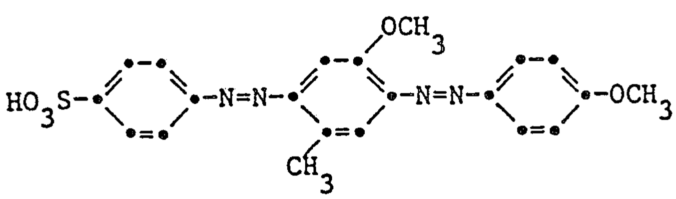

(11)

or with a mixture of the dyes of the formulae (10) and (11) with the dye of the formula

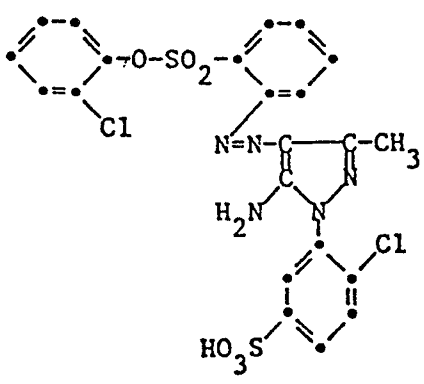

(12)

the ratio of the dyes of the formulae (10) to (12) being 1:1:1, and with one of the blue dyes of the formulae

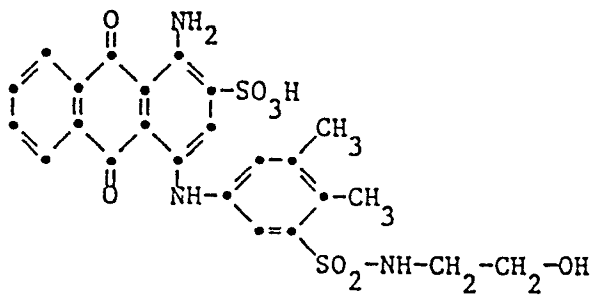

(16)

and

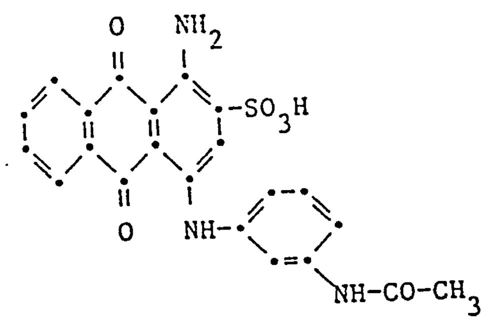

(20),

or with a mixture of the blue dye of the formula (16) with the blue dye of the formula

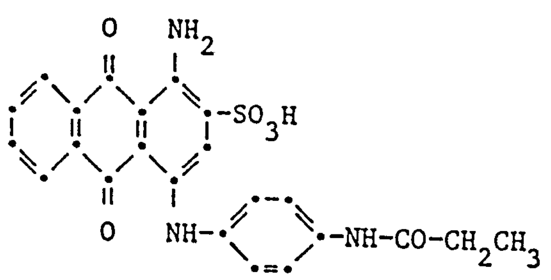

(18),

the ratio of the dyes (16) and (18) being 60:40 to 40:60.

10. Process for trichromatic dyeing or printing of materials made from natural and synthetic polyamide, characterized in that these materials are treated with a dye liquor or printing paste which contains the dye mixture according to Claim 1 as well as water and optionally further auxiliaries.

11. Aqueous dye liquor or printing paste, characterized in that it contains water, the dye mixture according to Claim 1 as well as optionally further auxiliaires.

**Revendications**

1. Procédé de teinture ou d'impression en trichromie de matières en polyamides naturels ou synthétiques, caractérisé en ce qu'on utilise un colorant rouge répondant à la formule

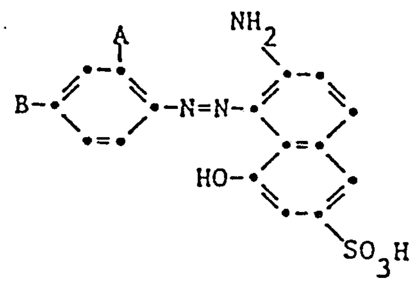

(1),

dans laquelle A est un hydrogène et B un groupe acétylamino ou cyclohexyloxycarbonylamino, ou bien A est un groupe trifluorométhyle et B un groupe acétylamino, ou bien A est un groupe phénylsulfonyle ou phénoxysulfonyle et B est un hydrogène, ou un mélange du colorant rouge répondant à la formule (1) avec un colorant rouge répondant à la formule

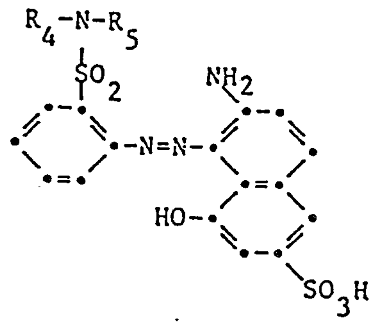

(2),

dans laquelle $R_4$ est un groupe méthyle ou éthyle et $R_5$ est un groupe cyclohexyle ou phényle, avec au moins un colorant jaune ou orangé répondant à la formule

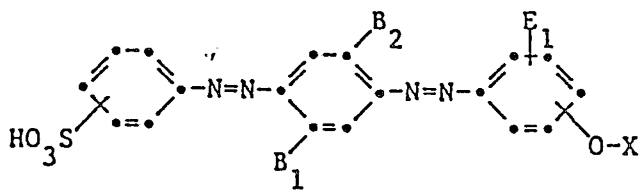

(3),

dans laquelle, $B_1$, $B_2$ et $E_1$ désignent chacun un hydrogène ou un groupe alkyle en $C_1$ à $C_4$ ou alcoxy en $C_1$ à $C_4$, et X désigne un groupe alkyle en $C_1$ à $C_4$ linéaire ou ramifié, ou un groupe hydroxyalkyle en $C_2$ à $C_4$ linéaire ou ramifié, ou un mélange d'au moins un colorant jaune ou orangé répondant à la formule (3) avec un colorant jaune répondant à la formule

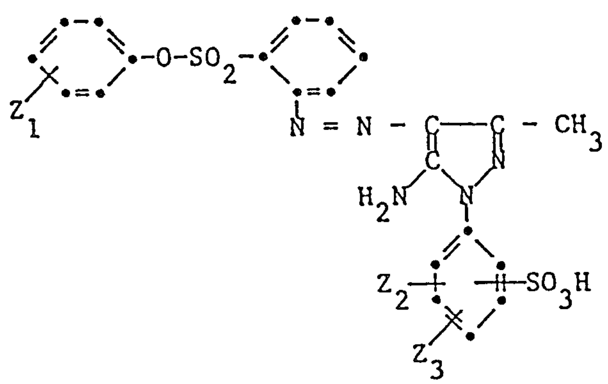

(4),

dans laquelle $Z_1$, $Z_2$ et $Z_3$ désignent indépendamment les uns des autres un hydrogène, un halogène ou un groupe alkyle en $C_1$ à $C_4$ ou alcoxy en $C_1$ à $C_4$, et au moins un colorant bleu répondant à la formule

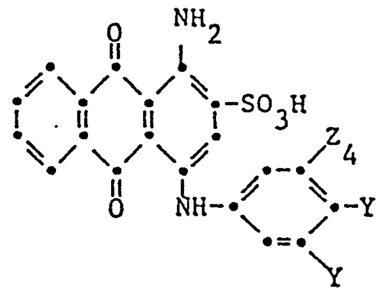

(5),

dans laquelle un Y est un hydrogène ou un groupe méthyle et l'autre Y est un groupe alcanoylamino en $C_2$ à $C_4$ ou hydroxyalkylsulfamoyle en $C_2$ à $C_4$, et $Z_4$ est un hydrogène ou un groupe méthyle.

2. Procédé selon la revendication 1, caractérisé en ce qu'on utilise un colorant rouge répondant à la formule (1), dans laquelle A et B ont les significations indiquées dans la revendication 1, avec le colorant rouge répondant à la formule

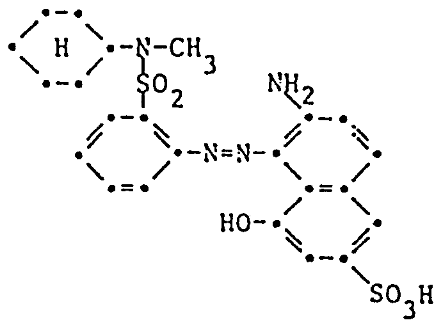

(6)

3. Procédé selon la revendication 1, caractérisé en ce qu'on utilise un colorant rouge répondant à la formule (1), dans laquelle A et B ont les significations indiquées dans la revendication 1, avec le colorant rouge répondant à la formule

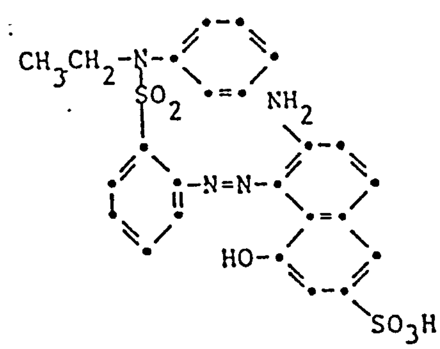

(7)

4. Procédé selon la revendication 1, caractérisé en ce qu'on utilise au moins un colorant jaune ou orangé répondant à la formule

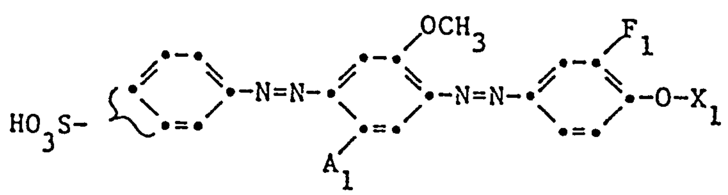

(8),

dans laquelle $A_1$ est un hydrogène ou un groupe méthyle, $F_1$ est un hydrogène ou un groupe méthyle et $X_1$ est un groupe méthyle, éthyle, β-hydroxyéthyle, β-hydroxypropyle, β-hydroxybutyle ou α-éthyl-β-hydroxyéthyle, ou un mélange d'au moins un colorant répondant à la formule (8) et d'un colorant jaune répondant à la formule

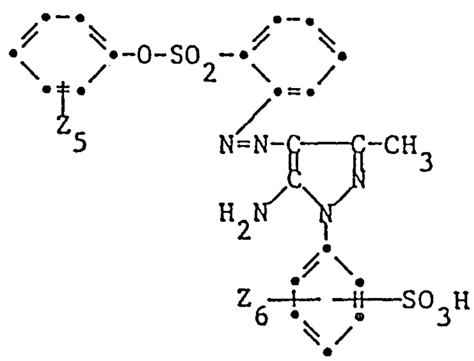

(9),

dans laquelle $Z_5$ et $Z_6$ désignent indépendamment l'un de l'autre un hydrogène, un groupe méthyle ou un chlore.

5. Procédé selon la revendication 4, caractérisé en ce qu'on utilise le colorant jaune répondant à la formule

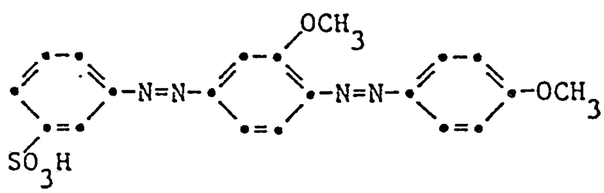

(10),

un mèlange du colorant jaune répondant à la formule 10 avec le colorant orangé répondant à la formule

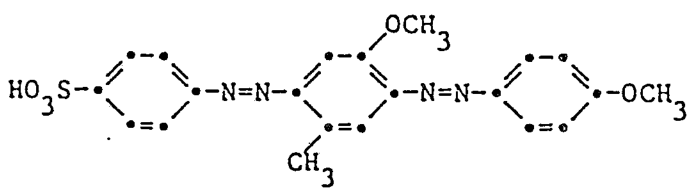

(11)

ou un mélange des colorants répondant aux formules 10 et 11 avec le colorant répondant à la formule

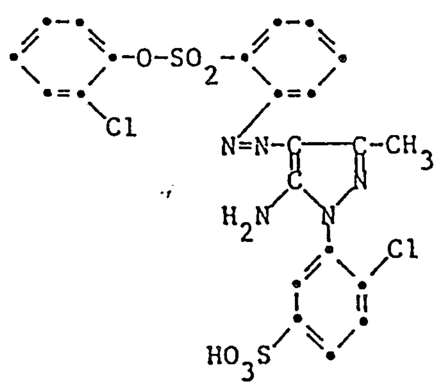

(12)

le rapport des colorants répondant aux formules 10 et 11 étant de 60:40 à 40:60 et en particulier de 1:1, et le rapport des colorants répondant aux formules (10), (11) et (12) étant de 60:20:20, 20:60:20 à 20:20:60, et en particulier de 1:1:1.

6. Procédé selon la revendication 1, caractérisé en ce qu'on utilise un colorant bleu répondant à la formule

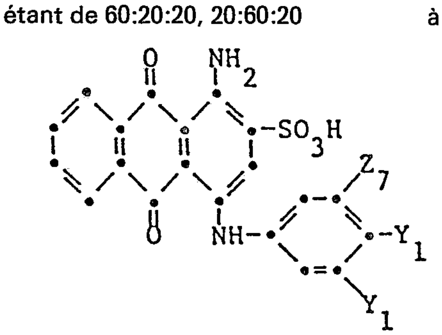

(13),

dans laquelle un des $Y_1$ est un hydrogène ou un groupe méthyle et l'autre $Y_1$, est un groupe acétylamino, propionylamino ou hydroxyalkylsulfamoyle en $C_2$ à $C_4$, et $Z_7$ est un hydrogène ou un groupe méthyle, ou un mélange des colorants bleus répondant aux formules

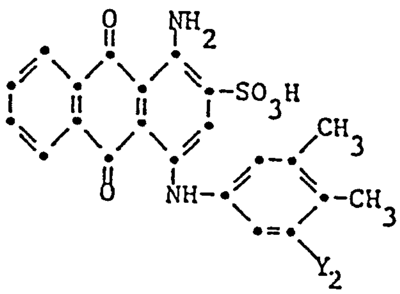

(14),

dans laquelle $Y_2$ est un radical hydroxyalkylsulfamoyle en $C_2$ à $C_4$, et

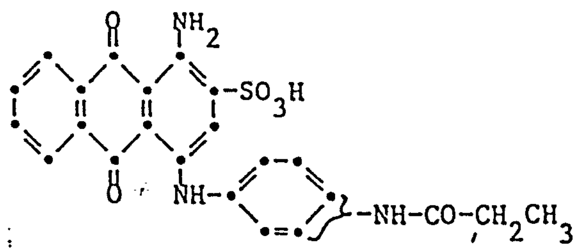

(15)

7. Procédé selon la revendication 6, caractérisé en ce qu'on utilise un colorant bleu répondant à l'une des formules

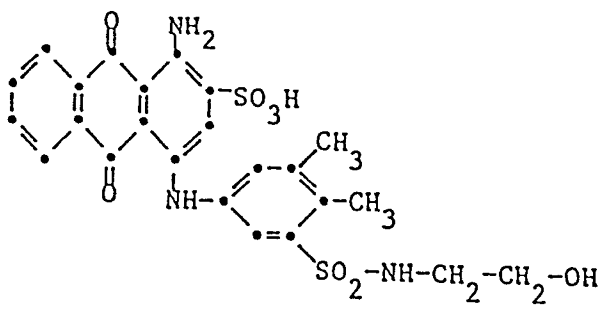

(16)

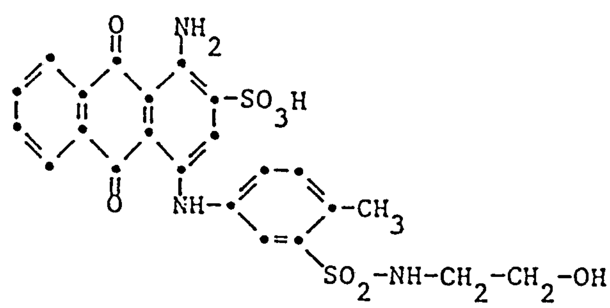

(17)

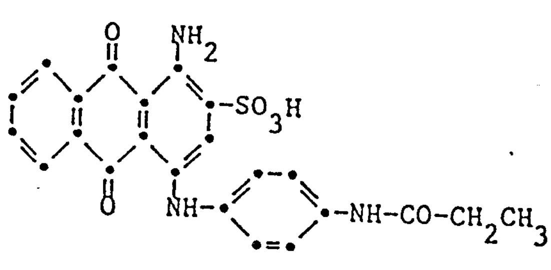

(18)

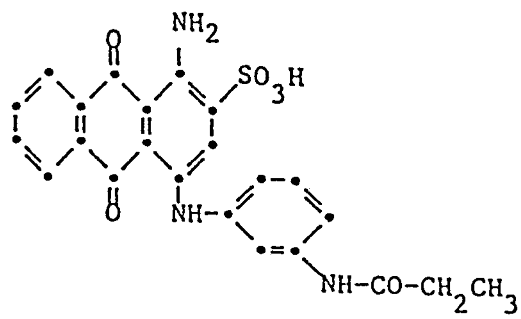

(19)

ou un mélange d'un colorant répondant à la formule (16) ou (17) avec un colorant répondant à la formule (18) ou (19).

8. Procédé selon la revendication 1, caractérisé en ce qu'on utilise un colorant rouge répondant à la formule (1), dans laquelle A est un hydrogène et B un groupe acétylamino ou cyclohexyloxycarbonylamino, ou bien A est un groupe trifluorométhyle et B un groupe acétylamino, ou bien A est un groupe phénylsulfonyle ou phénoxysulfonyle et B est un hydrogène, le cas échéant en mélange avec un colorant rouge répondant à la formule (2) dans laquelle $R_4$ est un groupe méthyle et $R_5$ un groupe cyclohexyle, ou bien $R_4$ est un groupe éthyle et $R_5$ un groupe phényle, avec le colorant jaune répondant à la formule

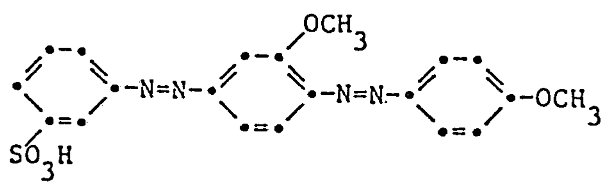

(10),

ou avec un mélange du colorant jaune répondant à la formule (10) et du colorant orangé répondant à la formule

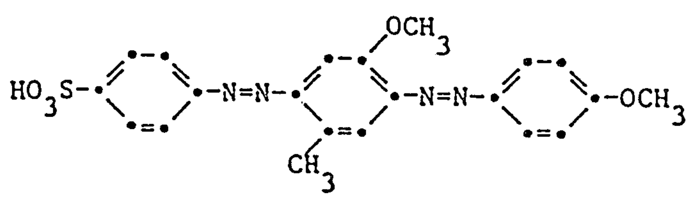

(11)

ou avec un mélange des colorants répondant aux formules (10) et (11) avec le colorant répondant à la formule

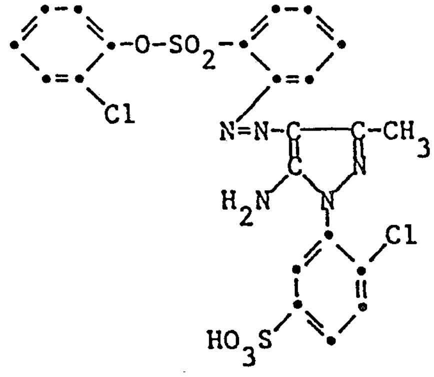

(12),

le rapport des colorants répondant aux formules (10) à (12) étant de 1:1 ou de 1:1:1, et avec un des colorants bleus répondant aux formules

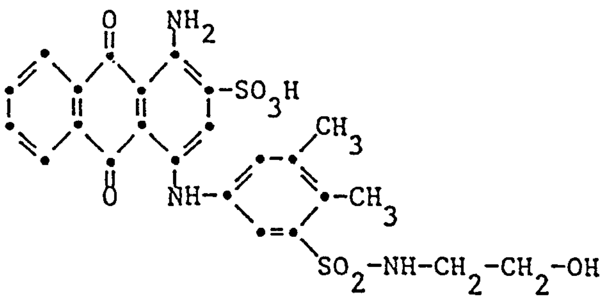

(16)

et

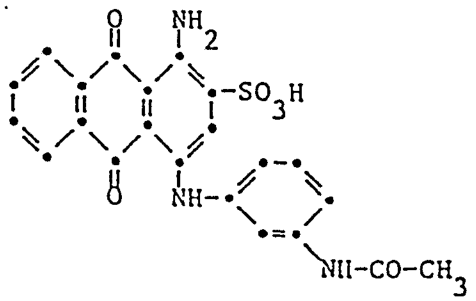

(20)

ou avec un mélange du colorant bleu répondant à la formule (16) avec un colorant répondant à la formule

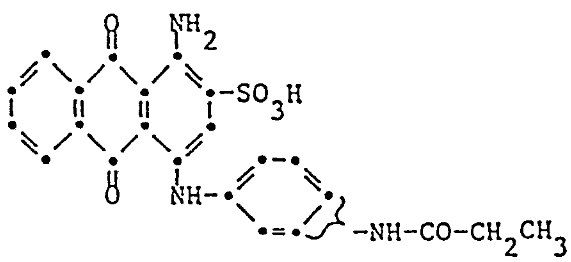

(15),

le rapport des colorants répondant aux formules (16) et (15) étant de 60:40 à 40:60.

9. Procédé selon la revendication 1, caractérisé en ce qu'on utilise un colorant rouge répondant à la formule (1), dans laquelle A est un groupe trifluorométhyle et B un groupe acétylamino, avec le colorant jaune répondant à la formule

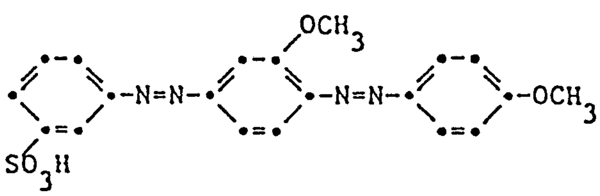

(10),

ou avec le colorant orangé répondant à la formule

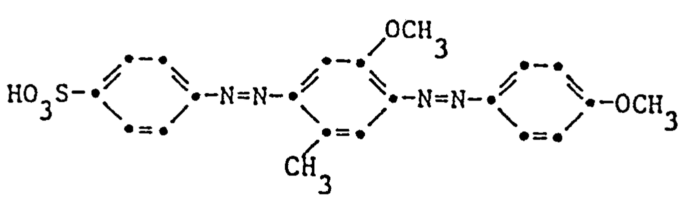

(11),

ou avec un mélange des colorants répondant aux formules (10) et (11) avec le colorant répondant à la formule

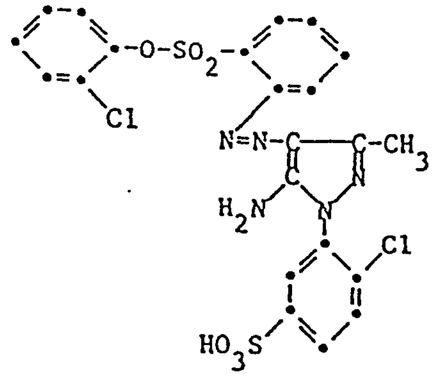

(12),

le rapport des colorants répondant aux formules (10) à (12) étant de 1:1:1, et avec un des colorants bleus répondant aux formules

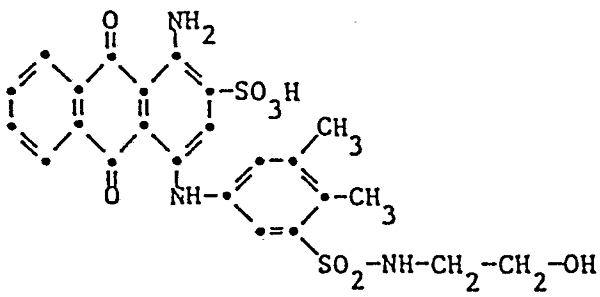

(16)

et

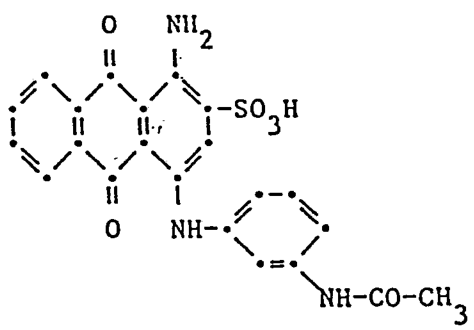

(20),

ou avec un mélange du colorant bleu répondant à la formule (16) avec le colorant bleu répondant à la formule

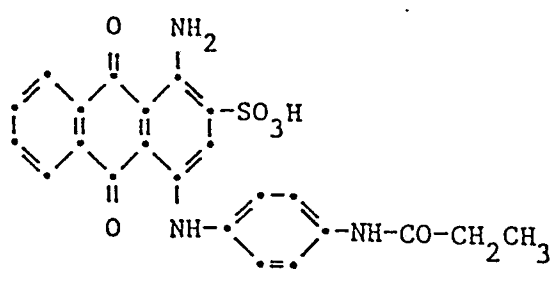

(18),

le rapport des colorants (16) et (18) étant de 60:40 à 40:60.

10. Procédé de teinture ou d'impression en trichromie de matières en polyamides naturels ou synthétiques, caractérisé en ce qu'on traite ces matières avec un bain de teinture ou un pâte d'impression qui contient le mélange de colorants selon la revendication 1, ainsi que de l'eau et le cas échéant d'autres additifs.

11. Bain de teinture ou pâte d'impression aqueux, caractérisé en ce qu'il contient de l'eau, le mélange de colorants selon la revendication 1, ainsi que le cas échéant d'autres additifs.